# EUROPEAN PATENT APPLICATION

(11) **EP 2 650 794 A1**
(43) Date of publication of application: **16.10.2013**
(21) Application number: 10860413.3
(22) Date of filing: 06.12.2010
(51) Int. Cl.: G06F 12/08, G06F 15/173

(54) **INFORMATION PROCESSING SYSTEM AND INFORMATION TRANSMISSION METHOD**

(71) Applicant: Fujitsu Limited, Kawasaki-shi, Kanagawa 211-8588 (JP)
(72) Inventor: ITOU, Daisuke, Kawasaki-shi Kanagawa 211-8588 (JP); HATAIDA, Makoto, Kawasaki-shi Kanagawa 211-8588 (JP); HOSOKAWA, Yuka, Kawasaki-shi Kanagawa 211-8588 (JP); AKIU, Susumu, Kawasaki-shi Kanagawa 211-8588 (JP)
(74) Representative: HOFFMANN EITLE
(86) International application number: PCT/JP2010/071788
(87) International publication number: WO 2012/077169

(57) **Abstract**

To reduce transmission load on a communication channel at the time of transmission of control information to multiple information processing units.

A control information transmitting unit (11a) of an information processing unit (10a) transmits a control packet (20) including control information (21) and destination information that designates one or more information processing units as destinations of the control information (21). In the case where, in the received control packet (20), the information processing unit (10b) is designated as a destination of the control information (21), a control information receiving unit (12b) of the information processing unit (10b) imports the control information from the control packet (20), and modifies the control packet (20) in such a manner that the destination information does not designate the information processing unit (10b) as a destination of the control information (21) and transmits the modified control packet (20). On the other hand, if the information processing unit (10b) is not designated as a destination of the control information (21), the control information receiving unit (12b) simply transmits the received control packet (20).

## Description

### Technical Field

The embodiments discussed herein are related to an information processing system and an information transmitting method.

### Background Art

As an architecture of an information processing system including multiple CPUs (Central Processing Units), a cc-NUMA (Cache Coherent Non-Uniform Memory Access Model) is known. In a cc-NUMA information processing system, multiple information processing units are connected to each other, where each of the information processing units includes a CPU and a distributed shared memory which is part of a shared memory space. In addition, such an information processing system with multiple CPUs needs a mechanism to maintain coherence among cache units (data integrity) of the individual CPUs. It is often the case that a mechanism using a management table called directory is adopted for a cc-NUMA information processing system.

In the case where data in the distributed shared memory of an information processing unit is cached in the cache unit of another information processing unit, the directory holds information indicating the information processing unit of the cache destination. Each information processing unit refers to the directory upon receiving a request to access data in its own distributed shared memory. If determining, based on the directory, that the access target data has been cached in a different information processing unit, the information processing unit transmits a request called "snoop" to the different information processing unit to thereby maintain cache coherence.

Snoop requests are transmitted to at least all information processing units that have cached the access target data. In some information processing systems where each information processing unit is provided with multiple CPUs individually having a cache unit, each snoop request is issued for an information processing unit rather than a CPU.

### Citation List

### Patent Literature

PTL1: Japanese Laid-open Patent Publication No. 2005-234854
PTL2: Japanese Laid-open Patent Publication No. 2009-245323
PTL3: Japanese Laid-open Patent Publication No. 10-187645

### Summary of Invention

### Technical Problem

As described above, snoop requests are transmitted to at least all information processing units that have cached the access target data in their own cache units. Therefore, the number of snoops increases as the number of information processing units having cached the access target data increases, which in turn increases transmission load on communication channels connecting the information processing units. Especially, in the case where the information processing units are connected in a ring topology, snoops individually destined for multiple information processing units are transmitted in the same communication channel, further increasing the transmission load. In addition, not only when snoops are transmitted to multiple information processing units but also when other kinds of control information are transmitted to multiple information processing units, the transmission load on the communication channel increases as the number of destination information processing units increases.

In view of the above-described problems, the embodiments aim at providing an information processing system and an information transmitting method capable of reducing transmission load on a communication channel at the time of transmission of control information to multiple information processing units.

### Solution to Problem

In order to solve the above-described problems, there is provided an information processing system in which multiple information processing units are connected by a communication channel in a ring topology. Each of the multiple information processing units included in the information processing system includes a control information transmitting unit and a control information receiving unit. The control information transmitting unit transmits, to the communication channel, a control packet including control information and destination information that designates one or more information processing units as destinations of the control information. The control information receiving unit receives the control packet via the communication channel, and imports the control information from the received control packet if the destination information designates an information processing unit to which the control information receiving unit belongs. Then, the control information receiving unit transmits the control packet to the communication channel after modifying the destination information in such a manner as not to designate the information processing unit to which the control information receiving unit belongs. On the other hand, when the destination information does not designate the information processing unit to which the control information receiving unit belongs, the control information receiving unit transmits the received control packet to the communication channel.

In order to solve the above-described problems, there is also provided an information transmitting method of executing the same processes as those of the aforementioned information processing system.

### Advantageous Effects of Invention

According to the aforementioned information processing system and information transmitting method, it is possible to reduce transmission load on the communication channel in a ring topology at the time of transmission of the control information to multiple information processing units.

These and other objects, features and advantages of the present invention become apparent from the following detailed description of illustrative embodiments thereof, which is to be read in connection with the accompanying drawings.

### Brief Description of Drawings

[FIG. 1] FIG. 1 illustrates a configuration example of an information processing system according to a first embodiment.
[FIG. 2] FIG. 2 illustrates an entire configuration example of an information processing system according to a second embodiment.
[FIG. 3] FIG. 3 illustrates formats of packets transmitted and received inside the information processing system.
[FIG. 4] FIG. 4 illustrates examples of information held in home determination tables.
[FIG. 5] FIG. 5 illustrates examples of information held in fetch management tables.
[FIG. 6] FIG. 6 illustrates a process of NC-Response packet transmission made by a destination system board in response to a Request packet transmitted by a source system board.
[FIG. 7] FIG. 7 illustrates processes carried out in system boards, following reception of an NC-Snoop packet.
[FIG. 8] FIG. 8 illustrates processes carried out in the system boards, in relation to transmission of an NC-Response packet.
[FIG. 9] FIG. 9 illustrates the NC-Snoop packet and the NC-Response packet being transmitted.
[FIG. 10] FIG. 10 illustrates another process example where the NC-Snoop packet is transmitted.
[FIG. 11] FIG. 11 illustrates a configuration example of a node and operations thereof.
[FIG. 12] FIG. 12 illustrates a configuration example of a node controller and operations thereof.
[FIG. 13] FIG. 13 illustrates an example of information held in a response reception determination table.
[FIG. 14] FIG. 14 illustrates an example of information held in an identifier conversion table.
[FIG. 15] FIG. 15 illustrates an example of information held in a response transmission determination table.
[FIG. 16] FIG. 16 is a flowchart illustrating a process carried out by an NC-Snoop processing unit at the time of reception of the NC-Snoop packet.
[FIG. 17] FIG. 17 is a flowchart illustrating a response counting process carried out by the NC-Snoop processing unit.
[FIG. 18] FIG. 18 is a flowchart illustrating an NC-Response receiving process carried out by the NC-Snoop processing unit.
[FIG. 19] FIG. 19 is a flowchart illustrating an NC-Response transmitting process carried out by the NC-Snoop processing unit.
[FIG. 20] FIG. 20 illustrates a configuration example of an NC-Response processing unit and operations thereof.
[FIG. 21] FIG. 21 is a flowchart illustrating a process example of a node controller following transmission of the NC-Snoop packet to a different node controller.
[FIG. 22] FIG. 22 is a flowchart illustrating a process of determining a snoop packet to be transmitted.

### Description of Embodiments

Several embodiments will be described below with reference to the accompanying drawings.

### First Embodiment

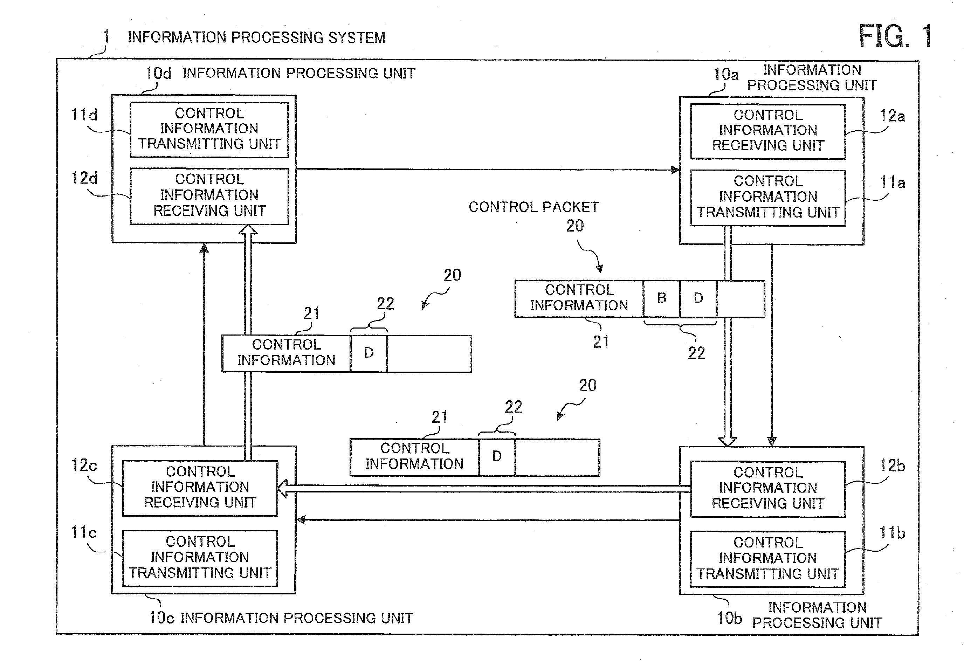

FIG. 1 illustrates a configuration example of an information processing system according to the first embodiment.

An information processing system 1 of FIG. 1 includes multiple information processing units connected in a ring topology. The information processing system 1 of FIG. 1 includes, for example, four information processing units 10a to 10d, among which data is transmitted in the order of 10a, 10b, 10c, 10d, 10a, and ....

The information processing unit 10a includes a control information transmitting unit 11a and a control information receiving unit 12a. In like fashion, the information processing unit 10b includes a control information transmitting unit 11b and a control information receiving unit 12b; the information processing unit 10c includes a control information transmitting unit 11c and a control information receiving unit 12c; and the information processing unit 10d includes a control information transmitting unit 11d and a control information receiving unit 12d. The control information transmitting units 11a to 11d individually implement similar processes, and the control receiving units 12a to 12d individually implement similar processes. Accordingly, as representatives, processes of the control information transmitting unit 11a and the control information receiving unit 12a of the information processing unit 10a are described next.

The control information transmitting unit 11a transmits, to a different information processing unit, a control packet including control information and destination information which designates an information processing unit as a destination of the control information. Note that in the destination information, multiple information processing units may be designated as destinations of the control information. The control information indicates, for example, a request to the destination information processing unit to implement a process of some sort.

On receiving a control packet transmitted from a different information processing unit, the control information receiving unit 12a carries out the following process based on the destination information stored in the received control packet. In the case where an information processing unit to which the control information receiving unit 12a belongs (i.e., the information processing unit 10a) is not designated in the destination information, the control information receiving unit 12a simply transfers the received control packet to a different information processing unit. On the other hand, if the information processing unit associated with the control information receiving unit 12a is designated in the destination information, the control information receiving unit 12a imports control information from the received control packet. One example of the control information importing process is to pass on the control information of the received control packet to a predetermined circuit of the information processing unit 10a. With this operation, the control information receiving unit 12a modifies the destination information of the received control packet in such a manner that its associated information processing unit is not anymore designated as a destination of the control information, and then transfers the control packet having the modified destination information to a different information processing unit.

Next described is an operation carried out when a control packet is transmitted, for example, from the control information transmitting unit 11a of the information processing unit 10a. The control information transmitting unit 11a of the information processing unit 10a transmits a control packet 20 including control information 21 and destination information 22 to the information processing unit 10b. Assume here that, in the destination information 22, the information processing units 10b and 10d are designated as destinations of the control information 21. In FIG. 1, "B" and "D" in the destination information 22 indicate that the information processing units 10b and 10d are individually designated as the destinations. Note that the configuration of storing the information indicating destinations of the control information 21 in the destination information 22 is not limited to the case illustrated in FIG. 1.

On receiving the control packet 20 transmitted from the information processing unit 10a, the control information receiving unit 12b of the information processing unit 10b refers to the destination information 22 of the received control packet 20. Since, in the destination information 22, the information processing unit 10b is designated as a destination, the control information receiving unit 12b imports the control information 21 from the received control packet 20. Note that the information processing unit 10b implements a process according to the imported control information 21.

In addition, the control information receiving unit 12b modifies the destination information 22 of the received control packet 20 in such a manner that the information processing unit 10b is not anymore designated as a destination. According to the example of FIG. 1, the control information receiving unit 12b modifies the destination information 22 by deleting "B" stored in the destination information 22. The control information receiving unit 12b transmits the control packet 20 with the modified destination information 22 to the information processing unit 10c.

Subsequently, on receiving the control packet 20 transmitted from the information processing unit 10b, the control information receiving unit 12c of the information processing unit 10c refers to the destination information 22 of the received control packet 20. Since the information processing unit 10c is not designated as a destination in the destination information 22, the control information receiving unit 12c simply transmits the received control packet 20 to the information processing unit 10d.

Then, on receiving the control packet 20 transmitted from the information processing unit 10c, the control information receiving unit 12d of the information processing unit 10d refers to the destination information 22 of the received control packet 20. Since, in the destination information 22, the information processing unit 10d is designated as a destination, the control information receiving unit 12d imports the control information 21 from the received control packet 20. Note that the information processing unit 10d implements a process according to the imported control information 21.

According to the above-described processes, the control information is transmitted to the multiple information processing units using a single control packet. This reduces transmission load on the communication channel compared to the case where the control information is transmitted to multiple information processing units using control packets individually dedicated to the information processing units. Especially, there is a greater effect of reducing the transmission load with an increase in the number of the information processing units to be destinations of the control information.

Each of the control information receiving units 12a to 12d may be configured not to transmit a received control packet to a different information processing unit if, in the control packet, only an information processing unit associated with the control information receiving unit is designated as a destination of the control information. According to the example of FIG. 1, when the control information receiving unit 12d of the information processing unit 10d receives the control packet 20, only the information processing unit 10d is designated as a destination in the destination information 22 of the control packet 20. In this case, after importing the control information 21 from the received control packet 20, the control information receiving unit 12d does not transmit the control packet 20 to the information processing unit 10a. In this manner, in the event where a control information receiving unit receives a control packet and, then, only an information processing unit associated with the control information receiving unit is designated in the destination information of the received control packet, the control packet will not be transferred any further, which reduces transmission load on the communication channel.

Next described is an embodiment of an information processing system in which information processing units each include a distributed shared memory and a processor core having a cache unit.

### Second Embodiment

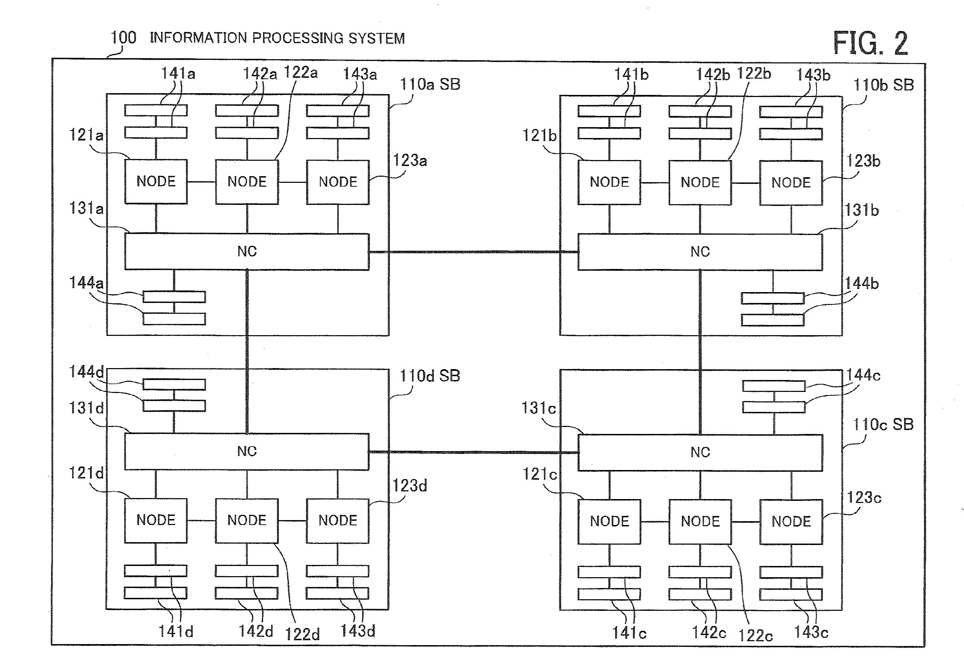

FIG. 2 illustrates an entire configuration example of an information processing system according to a second embodiment.

An information processing system 100 of FIG. 2 includes multiple system boards (SB) 110a to 110d. The system boards 110a to 110d are, for example, individually inserted into corresponding slots in a rack and connected in a ring topology via a backboard of the rack. The system boards 110a to 110d are examples of information processing units each including one or more processor cores. The processor cores provided in the individual system boards 110a to 110d execute processes in parallel, which enables the information processing system 100 to operate as a parallel computer. Note that the information processing system 100 includes four system boards 110a to 110d in this embodiment, however, the number of system boards is not limited to this.

The system board 110a includes multiple nodes 121a to 123a, a node controller (NC) 131a, and memories 141a to 144a. Each of the nodes 121a to 123a is a CPU, and is provided with one or more core units each including a processor core and a cache unit.

To provide connection, QPI (Quick Path Interconnect) buses are disposed between the individual nodes 121a to 123a, and between the node controller 131a and each of the nodes 121a to 123a. The node controller 131a connects the individual nodes 121a to 123a on the system board 110a, to which the node controller 131a belongs, and node controllers on other system boards. The memories 141a, 142a, and 143a are connected to the nodes 121a, 122a, and 123a, respectively, while the memory 144a is connected to the node controller 131a.

The system boards 110b to 110d individually have the same configuration as the system board 110a. That is, nodes 121b, 122b, and 123b, a node controller 131b, and memories 141b, 142b, 143b, and 144b on the system board 110b are components equivalent to the nodes 121a, 122a, and 123a, the node controller 131a, and the memories 141a, 142a, 143a, and 144a on the system board 110a, respectively. In like fashion, nodes 121c, 122c, and 123c, a node controller 131c, and memories 141c, 142c, 143c, and 144c on the system board 110c are components equivalent to the nodes 121a, 122a, and 123a, the node controller 131a, and the memories 141a, 142a, 143a, and 144a on the system board 110a, respectively. Further, nodes 121d, 122d, and 123d, a node controller 131d, and memories 141d, 142d, 143d, and 144d on the system board 110d are components equivalent to the nodes 121a, 122a, and 123a, the node controller 131a, and the memories 141a, 142a, 143a, and 144a on the system board 110a, respectively.

Note that the number of nodes provided on each system board is not limited to three.

The node controllers 131a to 131d are connected in a ring topology through interfaces, such as fiber channels. Assume in this embodiment that data is transferred in the order of the node controllers 131a, 131b, 131c, 131d, 131a, and ....

The information processing system 100 of this embodiment employs the cc-NUMA architecture. The memories 141a to 144a, 141b to 144b, 141c to 144c, and 141d to 144d are distributed shared memories to each of which part of an address space shared by the individual nodes of the information processing system 100 is allocated. The memories 141a to 144a, 141b to 144b, 141c to 144c, and 141d to 144d are individually controlled and managed by the nodes or node controllers directly connected thereto. A node controlling and managing a memory is called a home node of the memory. In FIG. 2, for example, the node 121a is a home node of the memory 141a.

The core unit in each node is able to access addresses in the memories under the control of other nodes (i.e., home nodes). A node to which the access-source core unit belongs is called "requester" since the node issues a Request packet to be hereinafter described. In the case where a home node managing a memory address of the access target is on a system board different from a system board to which the requester belongs, the requester accesses the home node on the different system board via node controllers. The core unit of the requester is able to cache data read from an accessed memory address.

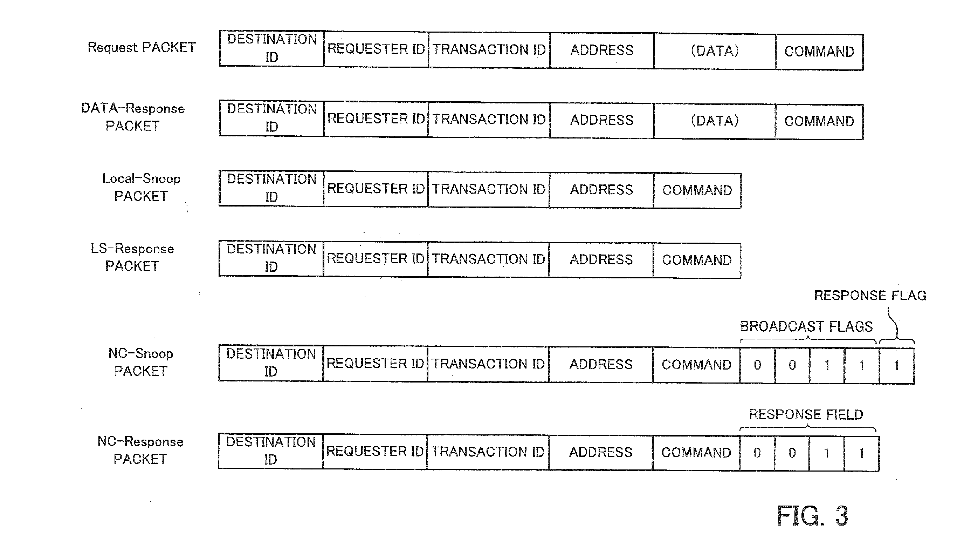

FIG. 3 illustrates formats of packets transmitted and received inside an information processing system.

A Request packet of FIG. 3 is transmitted from one node to another at the time when the core unit of the node makes a request to the other node for access to an address in a memory under the control of the other node. The Request packet includes the following fields: "destination identifier (ID)" indicating a node to which the packet is transmitted; "requester identifier" indicating a node making the access request (requester); "transaction identifier" which is a unique number assigned to each Request packet generated; "address" indicating an access target memory address; and "command" indicating a type of access. The Request packet may include a "data" field depending on information provided in the "command" field.

Next described are examples of the information provided in the "command" field. "Read_S" indicates that data is to be read from the access destination and, then, the read data shared between the access destination and the requester is to be cached in S (shared) state by the requester. "Read_E" indicates that data is to be read from the access destination and, then, exclusive data generated by the requester by modifying the read data is to be cached in E (exclusive) state by the requester. "Writeback" indicates that data being cached by the requester is to be written back to the access destination memory. In the case where "Writeback" is set in the "command" field, "data" storing write data therein is provided in the Request packet.

A DATA-Response packet is transmitted in response to a Request packet. The DATA-Response packet includes the following fields of "destination identifier", "requester identifier", "transaction identifier", "address", and "command". In the case where "Read_S" or "Read_E" is set in the "command" field of a corresponding Request packet, the DATA-Response packet also includes a "data" field in which data read from an access target address is set.

The "requester identifier", "transaction identifier", and "address" fields of the DATA-Response packet individually include the same information as that set in the like fields of the corresponding Request packet. The "command" field of the DATA-Response packet includes, for example, "D-Response_S" instructing that the read data is to be registered in a cache unit in the S state when "Read_S" is set in the "command" field of the corresponding Request packet. On the other hand, the "command" field of the DATA-Response packet includes "D-Response_E" instructing that the read data is to be registered in a cache unit in the E state when "Read_E" is set in the "command" field of the corresponding Request packet. The "command" field of the DATA-Response packet includes "Complete" notifying completion of data writeback if "Writeback" is set in the "command" field of the corresponding Request packet.

In the case where data in the access target address defined in a Request packet has been fetched and cached in a node other than the home node, a snoop packet is transmitted to the node having fetched the data. In the event of causing the cache unit of the node having fetched the data to execute a snoop process for maintaining cache coherence, a snoop packet is used to transmit control information of the snoop process. Types of snoop packets used in this embodiment are a Local-Snoop packet transmitted between nodes or between a node and a node controller on the same system board; and an NC-Snoop packet transmitted from a node controller to which the home node belongs to a node controller on a different system board.

The Local-Snoop packet includes the following fields of "destination identifier", "requester identifier", "transaction identifier", "address", and "command". The "address" field of the Local-Snoop packet includes the same information as that set in the like field of a corresponding Request packet. The "command" field of the Local-Snoop packet includes, for example, "Snoop_S" instructing that cached data at a node having fetched the data is to be put into the S state when "Read_S" is set in the "command" field of the corresponding Request packet. On the other hand, the "command" field of the Local-Snoop packet includes "Snoop_I" instructing that the cached data at the node having fetched the data is to be put into I (Invalid) state, meaning that the cached data is to be invalidated, when "Read_E" is set in the "command" field of the corresponding Request packet.

An LS-Response packet is generated in response to a Local-Snoop packet making a snoop request and stores therein a result of a snoop process defined in the corresponding Local-Snoop packet. The LS-response packet includes the following fields of "destination identifier", "requester identifier", "transaction identifier", "address", and "command". The "requester identifier", "transaction identifier", and "address" fields of the LS-Response packet include the same information as that set in the like fields of the corresponding Local-Snoop packet.

In the case where, for example, "Snoop_S" is set in the "command" field of the corresponding Local-Snoop packet, the "command" field of the LS-Response packet includes "Response_S" indicating that cached data corresponding to an address provided in the "address" field has been put in the S state, meaning that the cached data has been set to be shared between a node having transmitted the Local-Snoop packet and a node responding with the LS-Response packet. On the other hand, if "Snoop_I" is set in the "command" field of the corresponding Local-Snoop packet, the "command" field of the LS-Response packet includes "Response_I" indicating that the cached data corresponding to the "address" field has been put in the I state, meaning that the cached data has been invalidated.

An NC-Snoop packet enables, as just a single packet, transmission of control information used to execute a process for maintaining cache coherence to one or more nodes having cached data from an access target address defined in a corresponding Request packet. The NC-Snoop packet includes fields of "broadcast flag" and "response flag" in addition to "destination identifier", "requester identifier", "transaction identifier", "address", and "command" fields.

The "address" field of the NC-Snoop packet includes the same information as that set in the like field of the corresponding Request packet. The "destination identifier" field of the NC-Snoop packet is not used and, therefore, a value not indicating a specific node (for example, a value indicating broadcasting) is set in the "destination identifier" field. Note that the NC-Snoop packet may not include the "destination identifier" field since its destination is set using the "broadcast flag" field to be described later.

The "command" field of the NC-Snoop packet includes a type of process to be executed by the cache unit of each node having fetched corresponding data. In the case where, for example, "Read_S" is set in the "command" field of the corresponding Request packet, the "command" field of the NC-Snoop packet includes "NC-Snoop_S" instructing that cached data at the node having fetched the data is to be put into the S state, meaning that the cached data is set to be shared between a node having transmitted the NC-Snoop packet and the node having fetched the data. On the other hand, in the case where "Read_E" is set in the "command" field of the corresponding Request packet, the "command" field of the NC-Snoop packet includes "NC-Snoop_I" instructing that the cached data at the node having fetched the data is to be put into the I state, meaning that the cached data is to be invalidated.

In the "broadcast flag" field in place of the "destination identifier" field, one or more node controllers to be destinations of the NC-Snoop packet are set. The "broadcast flag" field has multiple bits, each corresponding to one of the node controllers 131a to 131d of the information processing system 100. In the case where a bit in the "broadcast flag" field is set to "1", a node controller corresponding to the bit is instructed to broadcast a Local-Snoop packet to nodes on a system board to which the node controller belongs.

The "response flag" field is provided to instruct one of nodes having received the NC-Snoop packet to transmit an NC-Response packet corresponding to the received NC-Snoop packet. The "response flag" field has one bit, which is set to "1" in the initial state when the NC-Snoop packet is transmitted from a first node controller. Subsequently, when the NC-Snoop packet is received by a node defined in the "broadcast flag" field for the first time, the bit of the "response flag" field is changed to "0". Accordingly, "0" being set in the "response flag" field indicates that the NC-Snoop packet has already been received by at least one of the node controllers defined as its destinations in the "broadcast flag" field.

An NC-Response packet is generated in response to an NC-Snoop packet and stores therein a result of a process defined in the "command" field of the NC-Snoop packet. The NC-Response packet, as just a single response packet, is able to notify a node controller having transmitted the NC-Snoop packet of the processing result of one or more node controllers defined in the "broadcast flag" field of the NC-Snoop packet. The NC-Response packet includes a "response field" in addition to "destination identifier", "requester identifier", "transaction identifier", "address", and "command" fields.

The "destination identifier" field of the NC-Response packet includes an identifier indicating a home node associated with the address defined in the corresponding NC-Snoop packet. The "requester identifier", "transaction identifier", and "address" fields in the NC-Response packet include the same information as that set in the like fields of the corresponding NC-Snoop packet.

In the case where, for example, "NC-Snoop_S" is set in the "command" field of the corresponding NC-Snoop packet, the "command" field of the NC-Response packet includes "NC-Response_S" indicating that cached data corresponding to an address provided in the "address" field has been put in the S state, meaning that the cached data has been set to be shared between a node having transmitted the NC-Snoop packet and a node having fetched the data. On the other hand, in the case where "NC-Snoop_I" is set in the "command" field of the corresponding NC-Snoop packet, the "command" field of the NC-Response packet includes "NC-Response_I" indicating that the cached data corresponding to the "address" field has been put in the I state, meaning that the cached data has been invalidated.

The "response field" of the NC-Response packet has bits, each corresponding to one of the node controllers 131a to 131d of the information processing system 100. A bit in the "broadcast flag" field being set to "1" indicates that a cache unit on a system board to which a node controller corresponding to the bit belongs has completed a process defined in the "command" field. For example, the case of the "command" field including "NC-Response_I" and the third bit of the "response field" being set to "1" indicates that cached data corresponding to an address provided in the "address" field has been put in the I state, meaning that the cached data on the system board 110d, to which the node controller 131d corresponding to the third bit belongs, has been invalidated.

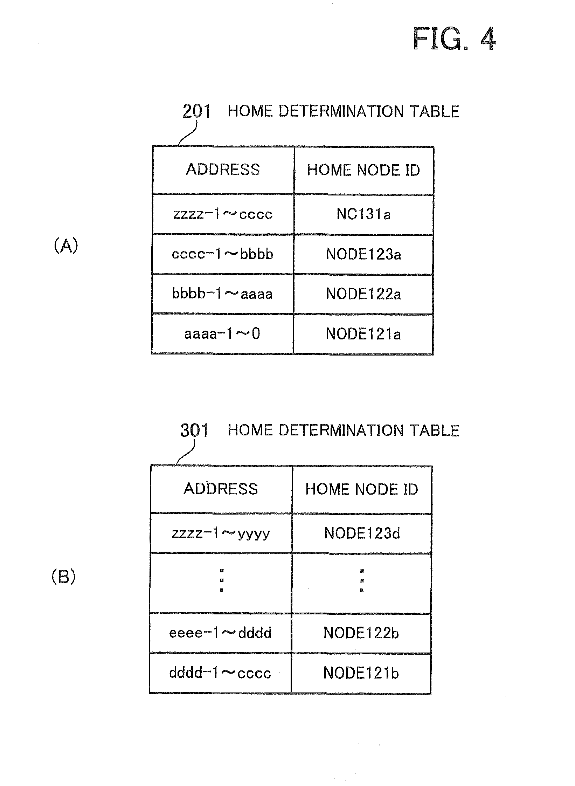

FIG. 4 illustrates examples of information held in home determination tables.

Individual nodes on a system board have a home determination table 201. The home determination table 201 provided for each node is a table of correspondence between addresses in the shared memory space and identifiers of home nodes. The identifiers of the nodes registered in the home determination table 201 are ones locally used on a system board to which the individual nodes belong. In the home determination table 201, an identifier of a node controller on the system board is associated with addresses other than memory addresses in the system board.

FIG. 4(A) illustrates an example of the home determination table 201 provided for each of the nodes 121a, 122a, and 123a. In the home determination table 201 of FIG. 4(A), for example, the node 121a is associated with addresses "0" to "aaaa-1". This indicates that the addresses "0" to "aaaa-1" have been assigned to the memory 141a connected to the node 121a. In addition, in the home determination table 201 provided for the node 121a, the node controller 131a is associated with addresses "cccc" to "zzzz-1". This indicates that the addresses "cccc" to "zzzz-1" have been assigned to memories connected to other system boards.

The individual node controllers 131a to 131d of the information processing system 100 have a home determination table 301. The home determination table 301 provided for each node controller is a table of correspondence between addresses assigned to memories in different system boards and identifiers of home nodes on the different system boards. The node identifiers registered in the home determination table 301 are ones globally used in all the system boards of the information processing system 100. That is, the individual node identifiers registered in the home determination table 301 are unique across the entire system boards of the information processing system 100.

FIG. 4(B) illustrates an example of the home determination table 301 provided for the node controller 131a. In the home determination table 301 held by the node controller 131a, for example, the node 121b is associated with addresses "cccc" to "dddd-1". This indicates that the addresses "cccc" to "dddd-1" have been assigned to the node 121b on the system board 110b.

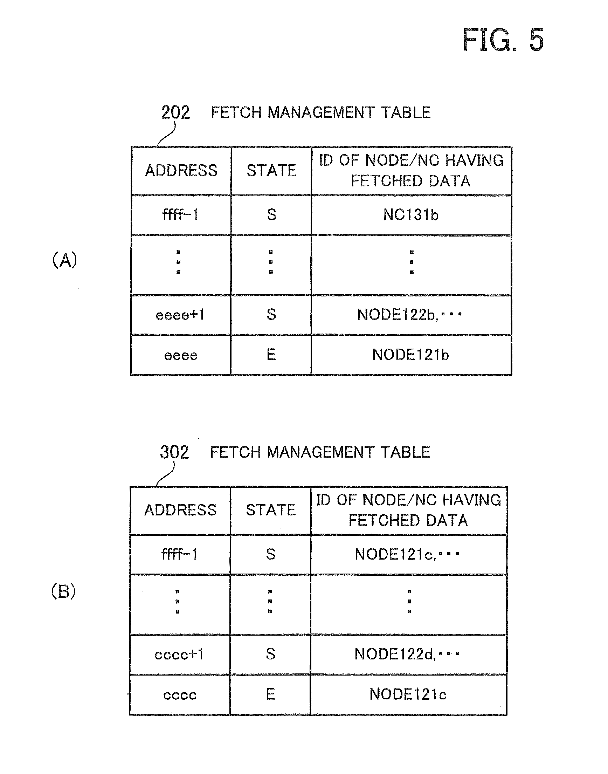

FIG. 5 illustrates examples of information held in fetch management tables.

Individual nodes on each system board have a fetch management table 202. In the fetch management table 202 held by each node, an entry is registered when data stored in a memory under the control of the node (i.e., home node) is fetched and cached by a different node. In each registered entry, a memory address at which the data is stored, a cached state of the data, and an identifier of the node having fetched the data are associated with each other. Identifiers of nodes registered in the fetch management table 202 held by each home node are ones locally used on a system board to which the home node belongs. In the case where the node having fetched the data is on a different system board, an identifier of a node controller on the system board to which the home node belongs is registered as a node identifier of the node having fetched corresponding data.

FIG. 5(A) illustrates an example of the fetch management table 202 provided for the node 123b. In the fetch management table 202 held by the node 123b, for example, an address "eeee" assigned to the memory 143b under the control of the node 123b is associated with the E state, indicating that data corresponding to the address "eeee" is exclusive data, and the identifier of the node 121b. This indicates that the data at the address "eeee" has been fetched by the node 121b and cached in the E state.

Each of the node controllers 131a to 131d of the information processing system 100 has a fetch management table 302. In the fetch management table 302 held by each node controller, an entry is registered when data stored in a memory on a system board to which the node controller belongs is fetched and cached by a node on a different system board. In each registered entry, a memory address at which the data is stored, a cached state of the data, and an identifier of the node having fetched the data are associated with each other. Identifiers of nodes registered in the fetch management table 302 held by each node controller are ones globally used in all the system boards of the information processing system 100.

FIG. 5(B) illustrates an example of the fetch management table 302 provided for the node controller 131b. In the fetch management table 302 held by the node controller 131b, for example, the address "cccc" assigned to one of the memories 141b to 143b on the system board 110b is associated with the E state and the identifier of the node 121c. This indicates that the data at the address "cccc" has been fetched by the node 121c and cached in the E state.

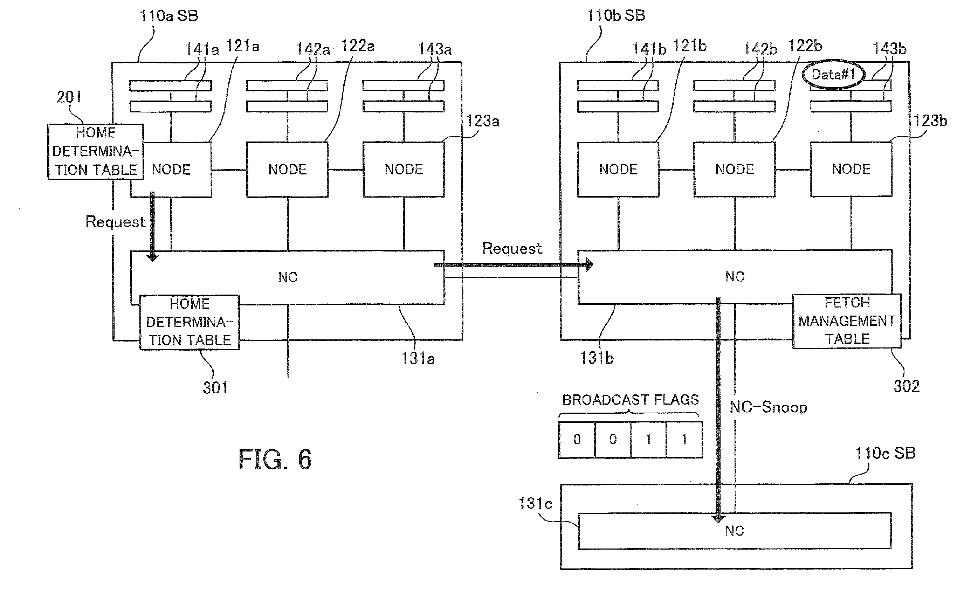

The following provides a processing example of data access to a memory in the information processing system 100, and also describes transmission and reception processes of the packets illustrated in FIG. 3. With reference to the following FIGS. 6 to 9, processes carried out in the event where the node 121a on the system board 110a accesses the memory 143b connected to the node 121b on the system board 110b are described next as an example.

FIG. 6 illustrates a process of NC-Response packet transmission made by a destination system board in response to a Request packet transmitted by a source system board.

Assume in FIG. 6 that a core unit of the node 121a has requested to read data in the E state from an address assigned to the memory 143b connected to the node 123b on the system board 110b. The data stored at the read target address is hereinafter referred to as "data #1".

Referring to its own home determination table 201, the node 121a recognizes that the read target address is associated with the node controller 131a. In this case, because the read target address has been assigned to a memory connected to a different system board, the node 121a transmits a Request packet to the node controller 131a. In the Request packet, the "destination identifier" and "requester identifier" fields are set to indicate the node controller 131a and the node 121a, respectively, while "Read_E" is set in the "command" field.

On receiving the Request packet, the node controller 131a searches its own home determination table 301 for an address of data #1 set in the received Request packet. The node controller 131a extracts, from the home determination table 301, an identifier of the node 123b which is associated with the address of data #1. Then, the node controller 131a overwrites the "destination identifier" field of the Request packet with the extracted identifier of the home node (i.e., the node 123b), and transmits the Request packet with the changed "destination identifier" field to the node controller 131b on the system board 110b, which is a neighboring transfer destination of the node controller 131a.

On receiving the Request packet from the node controller 131a on the system board 110a, the node controller 131b determines, based on the "destination identifier" field, that the received Request packet is destined for a node connected to itself. The node controller 131b searches its own fetch management table 302 for the address of data #1 set in the received Request packet.

At this point, if an identifier corresponding to the address set in the Request packet is not found in the fetch management table 302, the node controller 131b transmits the Request packet to the node 123b indicated in the "destination identifier" field. In this case, if data #1 has been fetched into neither the node 121b nor the node 122b, the node 123b reads the requested data #1 in the E state from the memory 143b and, then, transmits a DATA-Response packet storing the read data #1 therein to the node controller 131b. Then, the DATA-Response packet is transmitted from the node controller 131b and is subsequently received by the node controller 131a via the node controllers 131c and 131d. The DATA-Response packet is eventually transferred to the requester node 121a connected to the node controller 131a and, thus, a series of the process is completed.

On the other hand, if one or more identifiers corresponding to the address set in the Request packet received from the node controller 131a are found in the fetch management table 302, the node controller 131b transmits a control command for maintaining cache coherence for data #1 to all nodes having fetched data #1 indicated by the identifiers found in the fetch management table 302. At this point, according to this embodiment, a single NC-Snoop packet is transmitted instead of snoop packets dedicated to individual node controllers connected to the nodes having fetched data #1. This reduces transmission load on the communication channel connecting the node controllers.

As described above, the NC-Snoop packet includes the "broadcast flag" field having bits each corresponding to one of the node controllers 131a to 131d. Assume here that, in the fetch management table 302 held by the node controller 131b, the nodes 121c and 122c on the system board 110c and the node 121d and 122d on the system board 110d have been registered as nodes having fetched data #1. Also assuming that the individual bits of the "broadcast flag" field are in the order corresponding to the node controllers 131a, 131b, 131c, and 131d, the node controller 131b generates an NC-Snoop packet having the "broadcast flag" field in which the third and fourth bits corresponding to the node controllers 131c and 131d, respectively, are set to "1" while the remaining bits are set to "0". Subsequently, the node controller 131b transmits the generated NC-Snoop packet to the node controller 131c, which is a neighboring transfer destination of the node controller 131b.

Because "Read_E" is set in the "command" field of the original Request packet, "NC-Snoop_I" instructing that cached data of data #1 is to be put into the I state is set in the "command" field of the NC-Snoop packet prior to the transmission.

Note that even if an identifier corresponding to the address set in the Request packet received from the node controller 131a is found in the fetch management table 302, an NC-Snoop packet may not be transmitted but the Request packet may be transmitted to the home node instead, depending on a combination of information set in the "command" field of the Request packet and a cached state of the data being fetched.

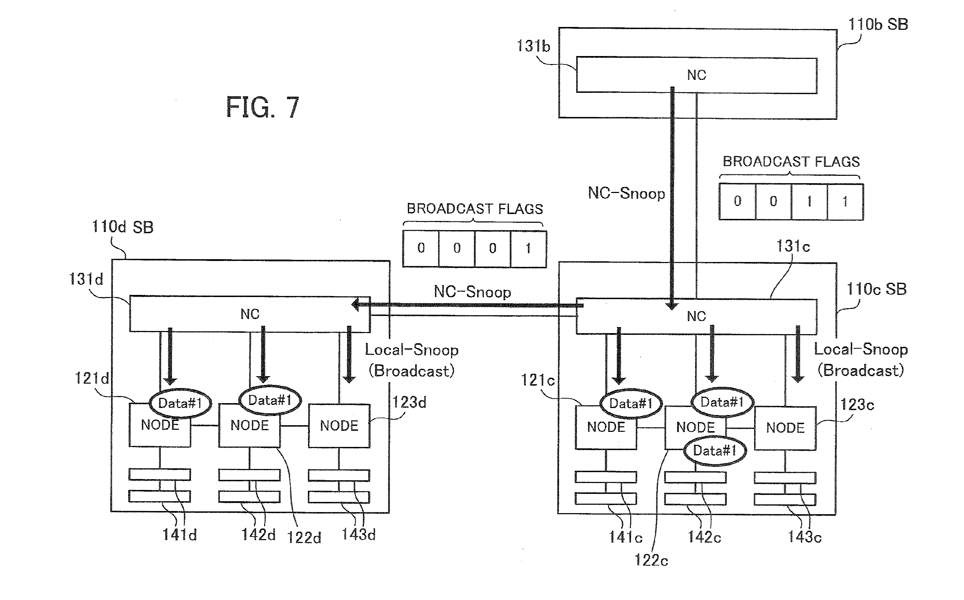

FIG. 7 illustrates processes carried out in system boards, following reception of an NC-Snoop packet.

On receiving the NC-Snoop packet from the node controller 131b, the node controller 131c refers to the "broadcast flag" field of the NC-Snoop packet. Because, in the "broadcast flag" field, the bit corresponding to the node controller 131c has been set to "1", the node controller 131c generates a Local-Snoop packet based on the content of the received NC-Snoop packet and broadcasts the Local-Snoop packet to all the nodes 121c to 123c on the system board 110c. In the "command" field of the broadcast Local-Snoop packet, "Snoop_I" is set based on the "command" field of the NC-Snoop packet.

In addition, the node controller 131c overwrites, in the "broadcast flag" field of the NC-Snoop packet, the bit corresponding to itself with "0", and transmits the NC-Snoop packet having the modified "broadcast flag" field to the node controller 131d, which is a neighboring transfer destination of the node controller 131c. On receiving the NC-Snoop packet, the node controller 131d refers to the "broadcast flag" field of the received NC-Snoop packet. Because, in the "broadcast flag" field, the bit corresponding to the node controller 131d has been set to "1", the node controller 131d generates a Local-Snoop packet based on the content of the received NC-Snoop packet and broadcasts the Local-Snoop packet to all the nodes 121d to 123d on the system board 110d. In the "command" field of the broadcast Local-Snoop packet, "Snoop_I" is set based on the "command" field of the NC-Snoop packet.

In addition, the node controller 131d overwrites, in the "broadcast flag" field of the received NC-Snoop packet, the bit corresponding to itself with "0". At this point, all the bits of the "broadcast flag" field become "0" and, therefore, the node controller 131d determines that the NC-Snoop packet has been received by all node controllers supposed to receive the NC-Snoop packet, and therefore does not transmit the NC-Snoop packet to the node controller 131a, which is a neighboring transfer destination of the node controller 131d.

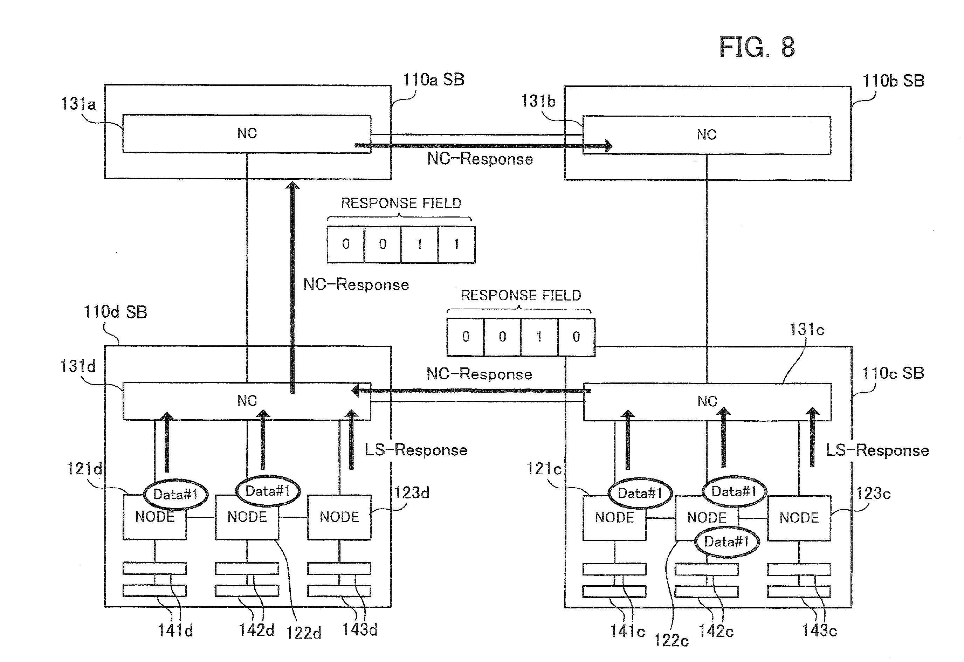

FIG. 8 illustrates processes carried out in system boards, in relation to transmission of an NC-Response packet.

When, in the system board 110c, the Local-Snoop packet is broadcast from the node controller 131c to the nodes 121c to 123c, the nodes 121c to 123c individually make a response in relation to a requested process defined in the received Local-Snoop packet. In the example of FIG. 8, data #1 has been cached in the individual nodes 121c and 122c. The cache units of the individual nodes 121c and 122c put cached data corresponding to the "address" field of the received Local-Snoop packet into the I state. Then, each of the nodes 121c and 122c transmits, to the node controller 131c, an LS-Response packet in which "Response_I" is set in the "command" field as a result of the requested process. On the other hand, because the node 123c does not have cached data corresponding to the "address" field of the Local-Snoop packet, the node 123c exercises no particular control over its cache unit and transmits, to the node controller 131c, an LS-response packet in which "NC-Response_I" is set in the "command" field.

An NC-Response packet which is a response to an NC-Snoop packet is generated and transmitted by, among node controllers defined in the "broadcast flag" field of the NC-Snoop packet, a first node controller that receives the NC-Snoop packet (the node controller 131c in the case of FIG. 8). On receiving the LS-response packets from all the nodes 121c to 123c on the system board 110c, the node controller 131c generates an NC-Response packet in which, in the "response field", the bit corresponding to itself is set to "1", and then transmits the NC-Response packet to its neighboring transfer destination, the node controller 131d.

Note that the "requester identifier" and "transaction identifier" fields of the NC-Response packet include the same identifiers as those set in the like fields of the corresponding NC-Snoop packet. In addition, "NC-Response_I" is set in the "command" field of the NC-Response packet.

Similarly in the system board 110d, when a Local-Snoop packet is broadcast from the node controller 131d to the nodes 121d to 123d, the nodes 121d to 123d individually make a response in relation to a requested process defined in the received Local-Snoop packet. The node controller 131d carries out the following process on receiving LS-response packets from all the nodes 121d to 123d on the system board 110d as well as receiving an NC-Response packet whose "requester identifier" and "transaction identifier" fields include the same identifiers as those set in the like fields of the NC-Snoop packet. The node controller 131d overwrites, in the "response field" of the received NC-Response packet, the bit corresponding to itself with "1", and transmits the NC-Response packet having the modified "response field" to its neighboring transfer destination, the node controller 131a.

The node controller 131a has not carried out in the past a process based on an NC-Snoop packet whose individual identifiers in the "requester identifier" and "transaction identifier" fields are the same as those set in the received NC-Response packet. Therefore, the node controller 131a simply transfers the received NC-Response packet to the node controller 131b. With this, the node controller 131b receives, from all the nodes having fetched data #1, completion notices regarding the process that the node controller 131b has requested using the NC-Snoop packet.

Note that, although not illustrated in FIG. 8, the node controller 131b after receiving the NC-Response packet transmits the Request packet for data #1 being fetched to the node 123b which is the home node of data #1. The node 123b determines that data #1 has been fetched to different system boards, and then transmits a Local-Snoop packet to the node controller 131b. In response to the Local-Snoop packet, the node controller 131b transmits, to the node 123b, an LS-Response packet including the processing results stored in the NC-Snoop packet (in this example, "Response_I" in the "command" field, indicating that the cached data has been put into the I state).

By receiving the LS-Response packet, the node 123b determines that cache coherence is maintained, and then reads data #1 in the E state from the memory 143b and transmits a DATA-Response packet including the read data #1 to the node controller 131b. The DATA-Response packet is transmitted from the node controller 131b and is subsequently received by the node controller 131a via the node controllers 131c and 131d. The DATA-Response packet is eventually transferred to the requester node 121a connected to the node controller 131a and, thus, a series of the process is completed.

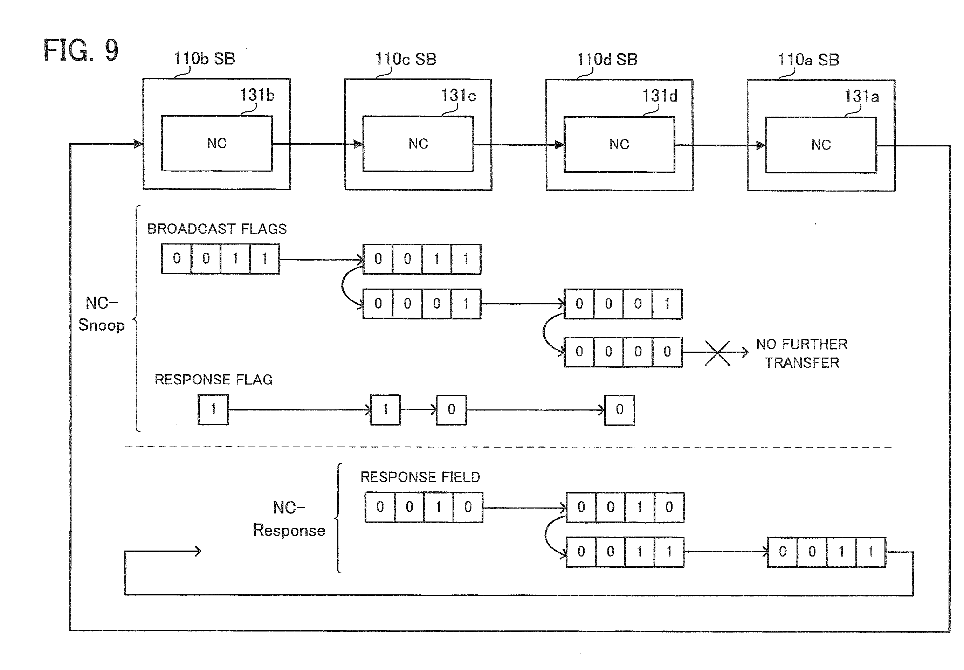

FIG. 9 illustrates an NC-Snoop packet and an NC-Response packet being transmitted.

Transmission of the NC-Snoop packet is described first. As described in FIG. 7, when transmitting the NC-Snoop packet, the node controller 131b sets, to "I", the third and fourth bits of the "broadcast flag" field corresponding to the node controllers 131c and 131d, respectively, while setting the remaining bits to "0". In addition, the node controller 131b sets an initial value of "1" in the "response flag" field of the NC-Snoop packet.

On receiving the NC-Snoop packet from the node controller 131b, the node controller 131c simply transmits the NC-Snoop packet to its neighboring transfer destination if, in the "broadcast flag" field, the bit corresponding to itself is "0". However, in the example of FIG. 9, the bit corresponding to the node controller 131c is "1", and therefore, the node controller 131c broadcasts a Local-Snoop packet based on the content of the NC-Snoop packet to the nodes on the system board 110c to which the node controller 131c belongs.

In addition, the node controller 131c overwrites, in the "broadcast flag" field of the NC-Snoop packet, the bit corresponding to itself with "0". Further, the node controller 131c overwrites the initial value of "1" in the "response flag" field of the NC-Snoop packet with "0". At this point, since "1" is still present in the "broadcast flag" field after the overwriting, the node controller 131c transmits the NC-Snoop packet having the modified "broadcast flag" and "response flag" fields to the neighboring node controller 131d.

On receiving the NC-Snoop packet from the node controller 131c, the node controller 131d recognizes that, in the "broadcast flag" field, the bit corresponding to itself is "1", and therefore broadcasts a Local-Snoop packet based on the content of the NC-Snoop packet to the nodes on the system board 110d to which the node controller 131d belongs. In addition, the node controller 131c overwrites, in the "broadcast flag" field of the NC-Snoop packet, the bit corresponding to itself with "0". At this point, all the bits in the "broadcast flag" field after the overwriting become "0", and therefore, the node controller 131d does not transmit the NC-Snoop packet any further.

By using the above-described NC-Snoop packet, it is possible to request, with a single packet, all node controllers to which nodes having fetched corresponding data belong to carry out a process defined in the "command" field. This reduces transmission load on the communication channel connecting the node controllers in the event where the data has been fetched to multiple nodes, compared to the case where a node controller connected to the home node transmits snoop packets individually dedicated to all the nodes having fetched the data.

Transmission of an NC-Response packet is described next. A node controller defined in the "broadcast flag" field of an NC-Snoop packet refers to the "response flag" field of the NC-Snoop packet. If the "response flag" field is "1", the node controller generates and transmits an NC-Response packet corresponding to the received NC-Snoop packet.

In the example of FIG. 9, the "response flag" field of the NC-Snoop packet is "1" when the node controller 131c receives the NC-Snoop packet. Therefore, the node controller 131c generates an NC-Response packet corresponding to the received NC-Snoop packet. When receiving Local-Snoop packets from all the nodes on the system board 110b and determining that all sets of cached data of data #1 on the system board 110b have been invalidated, the node controller 131c transmits the NC-Response packet to the node controller 131d. At this point, in the transmitted NC-Response packet, the "command" field includes "NC-Response_I" indicating that invalidation of the cached data has been completed, and the bit of the "response field", corresponding to the node controller 131b, is set to "1".

When receiving the NC-Response packet from the node controller 131c as well as receiving Local-Snoop packets from all the nodes on the system board 110c and determining that all sets of cached data of data #1 on the system board 110c have been invalidated, the node controller 131d transfers the NC-Response packet to the node controller 131a. At this point, in the transferred NC-Response packet, the bit of the "response field", corresponding to the node controller 131c, is set to "1".

The node controller 131a receives the NC-Response packet from the node controller 131d. However, the node controller 131a has not received in the past an NC-Snoop packet whose individual identifiers in the "requester identifier" and "transaction identifier" fields are the same as those set in the received NC-Response packet. In this case, the node controller 131a simply transfers the received NC-Response packet to the node controller 131b.

The node controller 131b receives the NC-Response packet from the node controller 131a. The node controller 131b determines that, in the received NC-Response packet, "Response_I" is set in the "command" field and the bits of the "response field", corresponding to the node controllers 131b and 131c, are "1". Based on the determined information, the node controller 131b recognizes that the cached dada on the individual system boards 110b and 110c has been invalidated.

Use of the above-described NC-Response packet allows a node controller having transmitted an NC-Snoop packet to recognize, with a single packet, that a process defined in the NC-Snoop packet has been completed in all nodes having fetched corresponding data. This reduces not only the data volume of snoop packets for requesting individual nodes for a process, but also the data volume of response packets generated in response to the snoop packets, in the event where data has been fetched to multiple nodes. As a result, it is possible to further reduce transmission load on the communication channel connecting the node controllers.

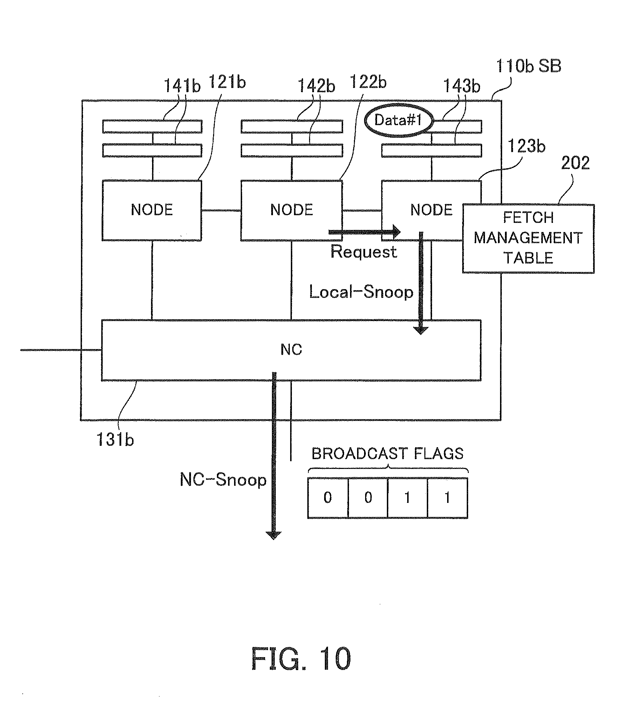

FIG. 10 illustrates another process example where an NC-Snoop packet is transmitted.

In addition to the case of receiving a Request packet from another node controller as in the example of FIG. 6, each node controller transmits an NC-Snoop packet also in the case of receiving a Local-Snoop packet from a node on a system board to which the node controller belongs.

Assume in FIG. 10 that a core unit of the node 122b has requested to read data in the E state from an address assigned to the memory 143b connected to the node 123b. Referring to its own home determination table (not illustrated), the node 123b recognizes that a home node corresponding to the read target address is the node 123b. The node 123b transmits a Request packet to the home node 123b. In the Request packet, "Read_E" is set in the "command" field.

On receiving the Request packet, the node 123b searches its own fetch management table 202 for an address set in the received Request packet. At this point, if an identifier corresponding to the address set in the Request packet is not found in the fetch management table 202, the node 123b reads the requested data #1 in the E state from the memory 143b and, then, transmits a DATA-Response packet storing the read data #1 therein to the node 122b.

On the other hand, if one or more identifiers corresponding to the address set in the Request packet are found in the fetch management table 202, the node 123b transmits, to the node controller 131b, a Local-Snoop packet in which "Snoop_I" is set in the "command" field. Assuming here that nodes having fetched the data are present both on the system boards 110c and 110d, the node controller 131b transmits an NC-Snoop packet in which, in the "broadcast flag" field, the individual bits corresponding to the system boards 110c and 110d are set to "1". The process from this point until the node controller 131b receives an NC-Response packet is the same as that described in FIGS. 7 and 8. The transmission of the NC-Snoop packet enables a control command for maintaining cache coherence for data #1 to be transmitted to all the nodes having fetched data #1.

Note that even if an identifier corresponding to the address set in the Request packet received from the node 122b is found in the fetch management table 202, a Local-Snoop packet may not be transmitted from the node 123b depending on a combination of information set in the "command" field of the Request packet and a cached state of the data being fetched.

Although not illustrated in FIG. 10, the node controller 131b after receiving the NC-Response packet transmits a Local-Response packet to the node 123b, thereby notifying the node 123b of completion of the process indicated by "Snoop_I" at all the nodes having fetched data #1. Recognizing the completion of the process indicated by "Snoop_I", the node 123b reads the requested data #1 in the E state from the memory 143b and, then, transmits a DATA-Response packet storing the read data #1 therein to the node 122b.

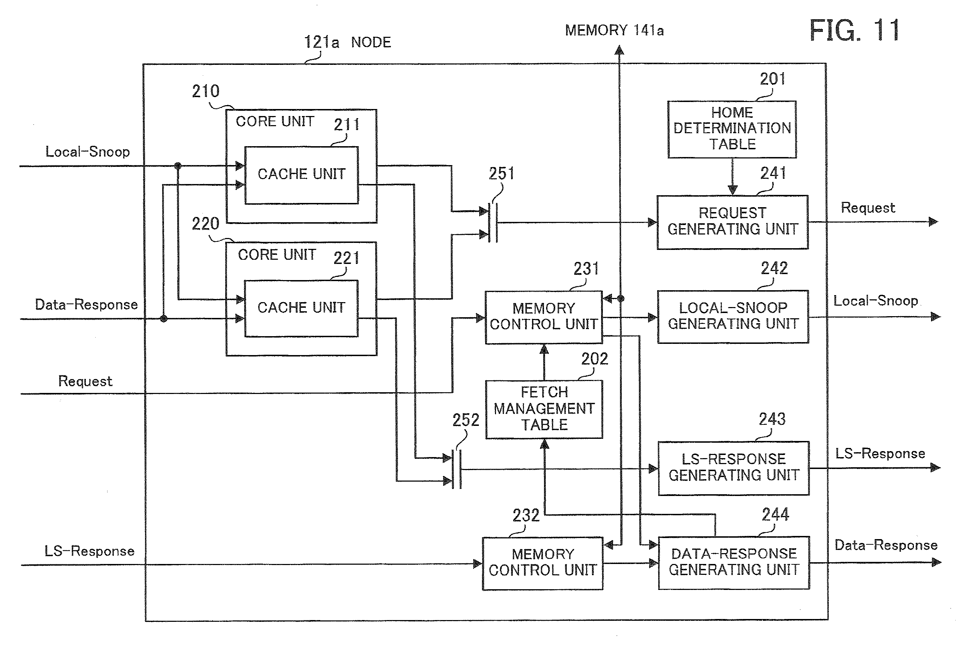

Next described are configuration examples of a node and a node controller and their detailed operations. FIG. 11 illustrates a configuration example of a node and operations thereof. In FIG. 11, the configuration of the node 121a on the system board 110a is depicted as an example, however, the remaining nodes also have the same configuration as illustrated in FIG. 11. Note that, in FIG. 11 and subsequent figures, like reference numerals are given to like internal components of all the nodes.

The node 121a includes core units 210 and 220, memory control units 231 and 232, a request generating unit 241, a Local-Snoop generating unit 242, an LS-Response generating unit 243, a DATA-Response generating unit 244, arbiters 251 and 252, the home determination table 201, and the fetch management table 202.

The core unit 210 includes a processor core (not illustrated) and a cache unit 211. Similarly, the core unit 220 includes a processor core (not illustrated) and a cache unit 221. Each of the cache units 211 and 221 includes a cache memory and a cache control unit for controlling the cache memory. Since the core units 210 and 220 are able to individually implement similar processes, the following describes only operations of the core unit 210.

In order to access data in a memory under the control of a different node (data not being cached in the cache unit 211), the core unit 210 transmits a request including an address of an access target and a command to the request generating unit 241 via the arbiter 251. In the case where the command is "Writeback", the request includes data to be written back.

On receiving the request from the core unit 210, the request generating unit 241 refers to the home determination table 201. As described above, in the home determination table 201, addresses in the shared memory space are associated with identifiers of home nodes. The request generating unit 241 extracts, from the home determination table 201, a node identifier associated with the address included in the request received from the core unit 210, and transmits a Request packet in which the extracted node identifier is set in the "destination identifier" field. Here, if a home node corresponding to the access target address is another node on the system board 110a, the Request packet is transmitted to the home node on the system board 110a. On the other hand, if the home node corresponding to the access target address is a node on a system board other than the system board 110a, the Request packet is transmitted to the node controller 131a on the system board 110a.

On receiving a DATA-Response packet from a different node on the system board 110a or the node controller 131a, the cache unit 211 of the core unit 210 carries out a process corresponding to the "command" field of the DATA-Response packet. In the case where the "command" field indicates completion of data readout, the cache unit 211 writes, in its cache memory, read data extracted from the "data" field of the DATA-Response packet in status indicated in the "command" field. On the other hand, in the case where the "command" field indicates completion of data write, the cache unit 211 recognizes the completion of data write.

In addition, on receiving a Local-Snoop packet from a different node on the system board 110a or the node controller 131a, the cache unit 211 of the core unit 210 carries out a process indicated in the "command" field of the Local-Snoop packet. For example, in the case where cached data corresponding to the "address" field of the received Local-Snoop packet is present in its cache memory, the cache unit 211 changes the status of the cached data to a status defined in the "command" field.

Once completing the process indicated in the "command" field of the Local-Snoop packet, the cache unit 211 notifies the LS-Response generating unit 243, via the arbiter 252, of the completion of the indicated process. The LS-Response generating unit 243 generates an LS-Response packet whose "command" field includes information indicating the completion of the process at the cache unit 211, and transmits the LS-Response packet to a source of the Local-Snoop packet.

On receiving a Request packet from a different node on the system board 110a or the node controller 131a, the memory control unit 231 refers to the fetch management table 202. As described above, in the case where data stored in the memory 141a under the control of the node 121a has been fetched by another node and cached, an address of the memory 141a in which the data is stored, a cached state of the data, and an identifier of the node having fetched the data have been registered in association with each other in the fetch management table 202.

Depending on the information obtained from the fetch management table 202 and information set in the "command" field of the received Request packet, the memory control unit 231 determines to transmit a Local-Snoop packet or a DATA-Response packet. In the case where, in the fetch management table 202, a node identifier corresponding to an address set in the received Request packet is not found in the column of "identifier of node/node controller having fetched data", the memory control unit 231 determines to transmit a DATA-Response packet. In addition, even if such a node identifier is found in the fetch management table 202, the memory control unit 231 determines to transmit a DATA-Response packet if "Writeback" is set in the "command" field of the Request packet or if "Read_S" is set in the "command" field and the cached state of the data is the S state. On the other hand, in the case where, in the fetch management table 202, a node identifier corresponding to the address set in the received Request packet is found in the column of "identifier of node/node controller having fetched data", the memory control unit 231 determines to transmit a Local-Snoop packet if "Read_E" is set in the "command" field of the Request packet or if "Read_S" is set in the "command" field and the cached state of the data is the E state.

As having determined to transmit a Local-Snoop packet, the memory control unit 231 notifies the Local-Snoop generating unit 242 of the node identifier of a node having fetched corresponding data. The Local-Snoop generating unit 242 transmits a Local-Snoop packet in which the node identifier notified of by the memory control unit 231 is set in the "destination identifier" field. In the case where a node corresponding to the node identifier, that is, a node having fetched the data is a node on the system board 110a, the Local-Snoop packet is transmitted to the node on the system board 110a. On the other hand, if a node having fetched the data is on a system board other than the system board 110a, the Local-Snoop packet is transmitted to the node controller 131a on the system board 110a.

On the other hand, as having determined to transmit a DATA-Response packet, the memory control unit 231 accesses the memory 141a. If the "command" field of the Request packet indicates a data read request, the memory control unit 231 reads data from the address set in the Request packet. If "Writeback" is set in the "command" field of the Request packet, the memory control unit 231 writes data extracted from the "data" field of the Request packet to the address set in the Request packet.

When having completed the access process to the memory 141a, the memory control unit 231 notifies the DATA-Response generating unit 244 of the process completion. In this case, the DATA-Response generating unit 244 transmits a DATA-Response packet to a source of the Request packet received by the memory control unit 231. If the "command" field of the Request packet indicates a data read request, the transmitted DATA-Response packet includes, in the "data" field, the data read from the memory 141a by the memory control unit 231.

If "Read_E" is set in the "command" field of the Request packet received by the memory control unit 231, the DATA-Response generating unit 244 updates the fetch management table 202. The DATA-Response generating unit 244 finds, in the fetch management table 202, an entry corresponding to the address set in the Request packet, and changes the state of the entry to the E state and registers an identifier set in the "requester identifier" field of the Request packet in the column of "identifier of node/node controller having fetched data".

On receiving an LS-Response packet from a different node on the system board 110a or the node controller 131a, the memory control unit 232 transfers the received LS-Response packet to the DATA-Response generating unit 244. At this point, if the "command" field of a Request packet corresponding to the received LS-Response packet indicates a data read request, the memory control unit 232 accesses the memory 141a and reads data from an address set in the LS-response packet. Note that the "Request packet corresponding to the received LS-Response packet" as is defined here is a Request packet having the same identifier set in the "transaction identifier" field as that of the received LS-Response packet. After reading data from the memory 141a, the memory control unit 232 transmits the read data to the DATA-Response generating unit 244.

On receiving the LS-Response packet via the memory control unit 232, the DATA-Response generating unit 244 transmits a DATA-Response packet in which a node indicated in the "requester identifier" field or the node controller 131a is set in the "destination identifier" field. In the case where data is read from the memory 141a by the memory control unit 232, the transmitted DATA-Response packet includes the read data in the "data" field.

In the case of having transmitted the DATA-Request packet in response to the reception of the LS-Response packet via the memory control unit 232, the DATA-Response generating unit 244 updates, in the fetch management table 202, an entry corresponding to the address set in the received LS-Response packet. Specifically, the DATA-Response generating unit 244 updates the entry by changing its information in the columns of "state" and "identifier of node/node controller having fetched data" according to a combination of information originally set in the columns of "command" and "state" of the fetch management table 202 before the update and information set in the "command" field of the received LS-Response packet.

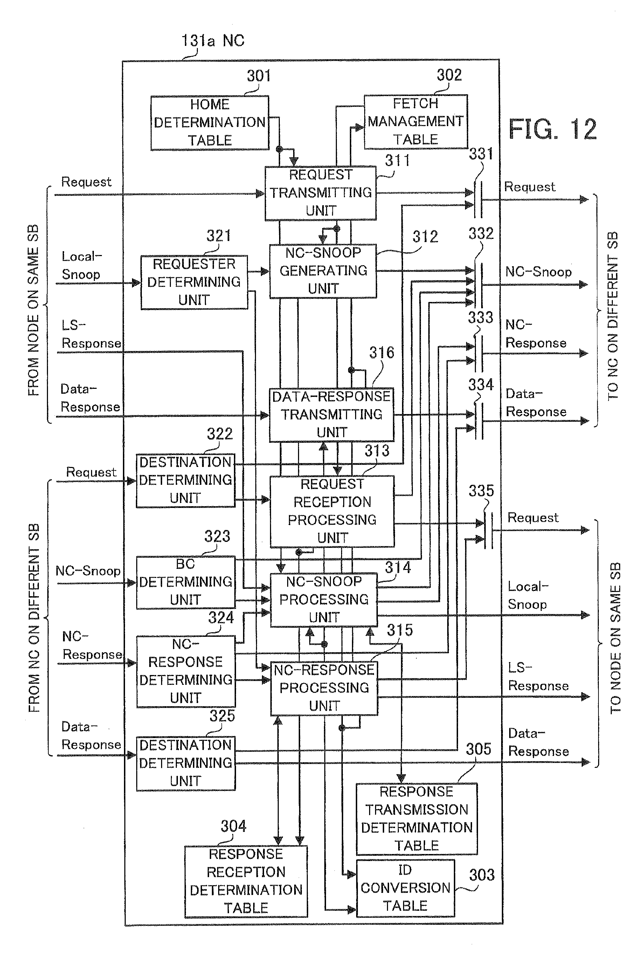

FIG. 12 illustrates a configuration example of a node controller and operations thereof. In FIG. 12, the configuration of the node controller 131a on the system board 110a is depicted as an example, however, the remaining node controllers 131b to 131d also have the same configuration as illustrated in FIG. 12. Note that, in FIG. 12 and subsequent figures, like reference numerals are given to like internal components of all the node controllers.

The node controller 131a includes a Request transmitting unit 311, an NC-Snoop generating unit 312, a Request reception processing unit 313, an NC-Snoop processing unit 314, an NC-Response processing unit 315, a DATA-Response transmitting unit 316, a requester determining unit 321, a destination determining unit 322, a broadcast (BD) determining unit 323, an NC-Response determining unit 324, a destination determining unit 325, and arbiters 331 to 335. The node controller 131a also includes, as information used for its processing, an identifier (ID) conversion table 303, a response reception determination table 304, and a response transmission determination table 305 in addition to the aforementioned home determination table 301 and fetch management table 302.

On receiving a Request packet from a node on the system board 110a to which the node controller 131a belongs, the Request transmitting unit 311 extracts, from the home determination table 301, a home node identifier corresponding to an address set in the Request packet. The Request transmitting unit 311 overwrites the "destination identifier" field of the received Request packet with the extracted home node identifier. At the same time, the Request transmitting unit 311 changes individual identifiers set in the "requester identifier" and "transaction identifier" fields of the received Request packet from identifiers locally used in the node controller 131a to ones globally used in multiple node controllers of the information processing system 100. The Request transmitting unit 311 transmits the Request packet having the changed identifiers in the "destination identifier", "requester identifier", and "transaction identifier" fields to the neighboring destination, the node controller 131b, via the arbiter 331.

Note that in the following description, an identifier locally used in a system board is referred to as the "local identifier" while an identifier globally used among system boards of the information processing system 100 is referred to as the "global identifier".

On receiving a Local-Snoop packet from a node on the system board 110a to which the node controller 131a belongs, the requester determining unit 321 compares individual identifiers in the "destination identifier" and "requester identifier" fields of the received Local-Snoop packet. In the case where the identifiers in these fields are the same (which happens, for example, when the Local-Snoop packet has been transmitted by the node in response to a Request packet transmitted by the node controller 131a), the requester determining unit 321 transmits the received Local-Snoop packet to the NC-Response processing unit 315. On the other hand, if the individual identifiers in the "destination identifier" and "requester identifier" fields are different from each other (which happens, for example, when the requester is a node on the system board 110a other than the home node), the requester determining unit 321 transmits the received Local-Snoop packet to the NC-Snoop generating unit 312.

On receiving the Local-Snoop packet via the requester determining unit 321, the NC-Snoop generating unit 312 acquires, from the fetch management table 302, a node identifier associated with an address set in the Local-Snoop packet to thereby determine a node having fetched data. The NC-Snoop generating unit 312 generates an NC-Snoop packet in which, in the "broadcast flag" field, one or more bits each corresponding to a node controller connected to a node having fetched corresponding data are set to "1" and also "1" is set in the "response flag" field. In addition, the NC-Snoop generating unit 312 converts the individual identifiers set in the "requester identifier" and "transaction identifier" fields of the received Local-Snoop packet from local identifiers to global identifiers, and sets the converted identifiers in the like fields of the NC-Snoop packet. The NC-Snoop generating unit 312 transmits the completed NC-Snoop packet to the neighboring destination, the node controller 131b, via the arbiter 332.

After transmitting the NC-Snoop packet, the NC-Snoop generating unit 312 registers a new entry in the response reception determination table 304. The registered entry is referred to when the node controller 131a receives an NC-Response packet corresponding to the transmitted NC-Snoop packet.

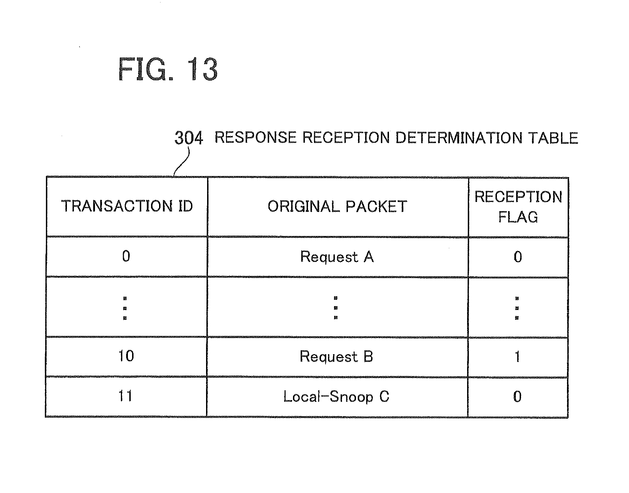

FIG. 13 illustrates an example of information held in a response reception determination table.

The response reception determination table 304 is used to hold content of each packet which has triggered transmission of an NC-Snoop packet until reception of an NC-Response packet corresponding to the transmitted NC-Snoop packet. The response reception determination table 304 includes registration fields for "transaction identifier" set in each transmitted NC-Snoop packet, "original packet" which has triggered the transmission of the NC-Snoop packet, and "reception flag" indicating whether an NC-Response packet corresponding to the NC-Snoop packet has been received.

For example, after transmitting an NC-Snoop packet, the NC-Snoop generating unit 312 registers, as an entry, a Local-Snoop packet received via the requester determining unit 321 in the column of "original packet" of the response reception determination table 304. An initial value "0" is set in the column of "reception flag" for the entry when an NC-Snoop packet corresponding to the entry has just been transmitted.

The description now now refers back to FIG. 12.

On receiving a Request packet from a node controller on a different system board, the destination determining unit 322 carries out the following process depending on a node identifier set in the "destination identifier" field of the Request packet. In the case where an identifier set in the "destination identifier" field indicates a node on a different system board, the destination determining unit 322 simply transmits the received Request packet to the node controller 131b via the arbiter 332. On the other hand, the identifier indicates a node on the system board 110a, the destination determining unit 322 transmits the received Request packet to the Request reception processing unit 313.

On receiving the Request packet via the destination determining unit 322, the Request reception processing unit 313 refers to the fetch management table 302. Depending on information obtained from the fetch management table 302 and information set in the "command" field of the received Request packet, the Request reception processing unit 313 determines to carry out either transmission of a Request packet to a node on the system board 110a or transmission of an NC-Snoop packet to a different system board.

In the case where, in the fetch management table 302, a node identifier corresponding to an address set in the received Request packet is not found in the column of "identifier of node having fetched data", the Request reception processing unit 313 determines to transmit a Request packet. Also, even if such a node identifier is found in the fetch management table 302, the Request reception processing unit 313 determines to transmit a Request packet if "Writeback" is set in the "command" field of the received Request packet or if "Read_S" is set in the "command" field and the cached state of the data is the S state.

On the other hand, in the case where, in the fetch management table 302, a node identifier corresponding to the address set in the received Request packet is found in the column of "identifier of node having fetched data", the Request reception processing unit 313 determines to transmit an NC-Snoop packet if "Read__E" is set in the "command" field of the received Request packet or if "Read_S" is set in the "command" field and the cached state of the data is the E state.

As having determined to transmit a Request packet, the Request reception processing unit 313 transmits the Request packet received from a different node controller, via the arbiter 335, to a home node on the system board 110a indicated in the "destination identifier" field. At this point, the Request reception processing unit 313 converts the individual identifiers set in the "destination identifier" and "transaction identifier" fields of the Request packet from global identifiers to local identifiers, and also converts the identifier of the "requester identifier" field from a global identifier to a local identifier indicating the node controller 131a. In addition, the Request reception processing unit 313 generates a new entry in the identifier conversion table 303 to store the identifiers before and after the conversion.

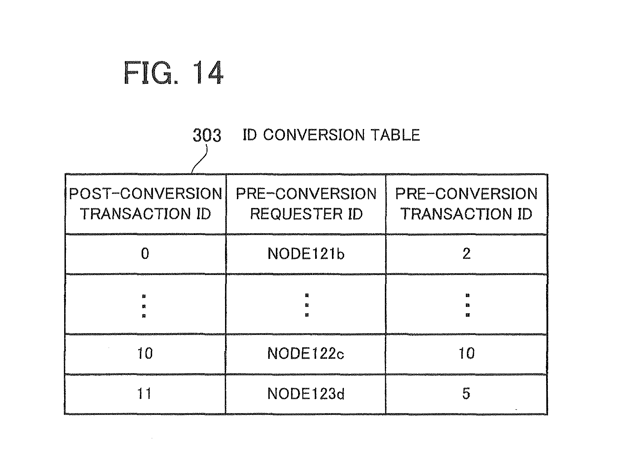

FIG. 14 illustrates an example of information held in an identifier conversion table.

At a time of transmission of a packet to a node on its own system board upon reception of a packet from a different system board, an entry including pre-conversion identifiers set in the received packet and a post-conversion identifier set in the transmitted packet is registered in the identifier conversion table 303. As illustrated in FIG. 14, the identifier conversion table 303 includes registration fields for "post-conversion transaction identifier" set in the transmitted packet and "pre-conversion requester identifier" and "pre-conversion transaction identifier" set in the received packet. Each entry of the identifier conversion table 303 is deleted at the time of reception of a response packet in response to a corresponding packet transmitted to a node on its own system board.

For example, the Request reception processing unit 313 registers, in the identifier conversion table 303 as an entry, an identifier set in the "transaction identifier" field of the Request packet transmitted to the home node on the system board 110a and individual identifiers set in the "requester identifier" and "transaction identifier" fields of the Request packet received via the destination determining unit 322. Each entry registered by the Request reception processing unit 313 is subsequently deleted by the DATA-Response transmitting unit 316 when receiving a corresponding DATA-Response packet from the home node on the system board 110a.

The ID conversion using the identifier conversion table 303 allows, for example, node identifiers and transaction identifiers to be sent from one system board to another, regardless of constraints of identifiers used by each system board, such as the number of identifiers available for each system board.

The description now refers back to FIG. 12.

As having determined to transmit an NC-Snoop packet, the Request reception processing unit 313 generates an NC-Snoop packet. The Request reception processing unit 313 sets individual identifiers of the "requester identifier" and "transaction identifier" fields of the Request packet received via the destination determining unit 322 into the like fields of the NC-Snoop packet. In addition, the Request reception processing unit 313 sets, in the "broadcast flag" field, one or more bits each corresponding to a node controller connected to a node having fetched corresponding data to "1" and also sets "1" in the "response flag" field. The Request reception processing unit 313 transmits the completed NC-Snoop packet to the node controller 131b via the arbiter 332.

After transmitting an NC-Snoop packet, the Request reception processing unit 313 registers a new entry in the response reception determination table 304. Specifically, the Request reception processing unit 313 registers the Request packet received via the destination determining unit 322 in the column of "original packet" for the entry in the response reception determination table 304. An initial value "0" is set in the column of "reception flag" for the entry when an NC-Snoop packet corresponding to the entry has just been transmitted.

On receiving an NC-Snoop packet from a node controller on a different system board, the broadcast determining unit 323 refers to the "broadcast flag" field of the received NC-Snoop packet. In the case where, in the "broadcast flag" field, a bit corresponding to the node controller 131a is "0", the broadcast determining unit 323 transfers the received NC-Snoop packet to the node controller 131b via the arbiter 332. On the other hand, if the bit corresponding to the node controller 131a is "1", the broadcast determining unit 323 transmits the received NC-Snoop packet to the NC-Snoop processing unit 314.

On receiving an NC-Response packet from a node controller on a different system board, the NC-Response determining unit 324 determines whether the received NC-Response packet is destined for a node on the system board 110a, based on an identifier set in the "destination identifier" field of the NC-Response packet. If the NC-Response packet is not destined for a node on the system board 110a, the NC-Response determining unit 324 transmits the received NC-Response packet to the NC-Snoop processing unit 314. On the other hand, if the NC-Response packet is destined for a node on the system board 110a, the NC-Response determining unit 324 transmits the received NC-Response packet to the NC-Response processing unit 315.

On receiving the NC-Snoop packet via the broadcast determining unit 323, the NC-Snoop processing unit 314 causes individual nodes on the system board 110a to carry out a process indicated in the NC-Snoop packet, and subsequently transmits an NC-Response packet with processing results of the individual nodes stored therein. For the process, the NC-Snoop processing unit 314 refers to the identifier conversion table 303 and the response transmission determination table 305.

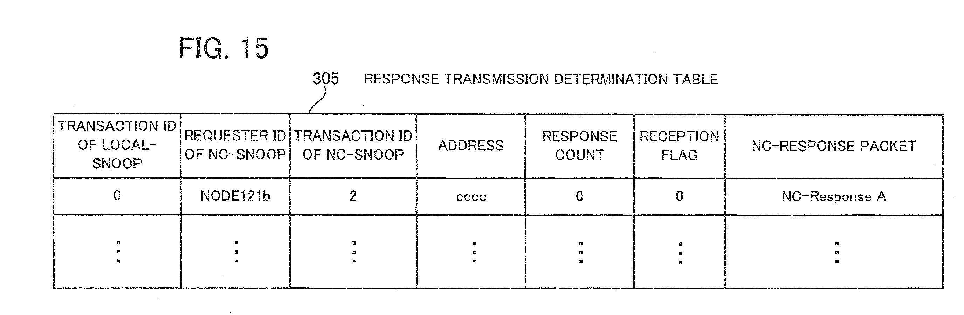

FIG. 15 illustrates an example of information held in a response transmission determination table.

When broadcasting a Local-Snoop packet to the nodes on the system board 110a upon reception of an NC-Snoop packet, the NC-Snoop processing unit 314 registers an entry in the response transmission determination table 305. The response transmission determination table 305 includes registration fields for "transaction identifier of Local-Snoop" which is a local identifier set in each transmitted Local-Snoop packet, "requester identifier of NC-Snoop" and "transaction identifier of NC-Snoop" both of which are global identifiers set in a corresponding original NC-Snoop packet, and "address", "response count", "reception flag", and "NC-Response packet" set in the transmitted Local-Snoop packet.

The "response count" of each entry indicates the number of LS-Response packets received in response to a Local-Snoop packet broadcast in the system board 110a, and is set to an initial value of "0" when the entry is registered and may increase to a maximum value of "3" which is the number of nodes provided on the system board 110a. The "reception flag" of each entry indicates whether an NC-Response packet in response to a corresponding NC-Response packet has been received from a different node controller, and is updated from "0" to "1" when the corresponding NC-Response is received. The "NC-Response packet" of each entry directly stores an NC-Response packet received from a different node controller. When an NC-Response packet is being stored in an entry, "1" is set in the corresponding "reception flag".

Each entry registered in the response transmission determination table 305 is deleted therefrom when a corresponding NC-Response packet is transmitted to a different node controller.

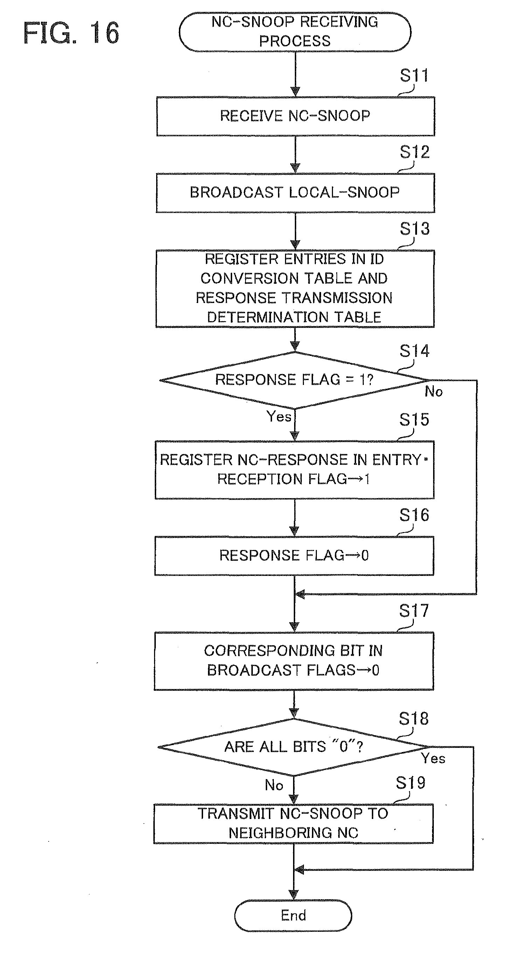

Processes carried out by the NC-Snoop processing unit 314 are described next with reference to flowcharts. FIG. 16 is a flowchart illustrating a process carried out by an NC-Snoop processing unit at the time of reception of an NC-Snoop packet.

[Step S11] The NC-Snoop processing unit 314 receives an NC-Snoop packet via the broadcast determining unit 323.

[Step S12] The NC-Snoop processing unit 314 broadcasts a Local-Snoop packet to the nodes 121a, 122a, and 123a on the system board 110a. At this point, the NC-Snoop processing unit 314 generates the Local-Snoop packet in such a manner that the "requester identifier" field includes a local identifier indicating its own node controller 131a and the "transaction identifier" includes a local identifier. In addition, the "address" and "command" fields of the Local-Snoop packet include information individually set in the like fields of the received NC-Snoop packet.

[Step S13] The NC-Snoop processing unit 314 registers a new entry in each of the identifier conversion table 303 and the response transmission determination table 305. The following information is set into the individual entries by the NC-Snoop processing unit 314: the "transaction identifier", which is a local identifier, set in the Local-Snoop packet transmitted in step S12; and the "requester identifier" and "transaction identifier", which are global identifiers, set in the NC-Snoop packet received in step S11. In addition, the NC-Snoop processing unit 314 sets, in the response transmission determination table 305, "0" in both the "response count" and the "reception flag" for the new entry.

[Step S14] In the case where the "response flag" of the NC-Snoop packet received in step S11 is "1", the process moves to step S15. On the other hand, if it is "0", the process moves to step S17.

[Step S15] When the "response flag" is "1", the NC-Snoop processing unit 314 generates a new NC-Response packet by the following procedure. The NC-Snoop processing unit 314 sets information individually set in the "request identifier", "transaction identifier", and "address" fields of the NC-Snoop packet received in step S11 into the like fields of the NC-Response packet. In addition, the NC-Snoop processing unit 314 determines, referring to the home determination table 301, a home node identifier corresponding to the information set in the "address" field of the NC-Snoop packet received in step S11, and sets the home node identifier into the "destination identifier" field of the NC-Response packet. Further, the NC-Snoop processing unit 314 sets, into the "command" field of the NC-Snoop packet, information indicating completion of a process defined in the "command" field of the NC-Snoop packet received in step S11. As for the "response field" of the NC-Snoop packet, the NC-Snoop processing unit 314 leaves all the bits set to "0" at this point.

The NC-Snoop processing unit 314 registers the NC-Response packet generated by the above-described procedure in the entry made to the response transmission determination table 350 in step S13, and also overwrites the "reception flag" of the entry with "1".

[Step S16] The NC-Snoop processing unit 314 overwrites the "response flag" of the NC-Snoop packet received in step S11 with "0".

[Step S17] The NC-Snoop processing unit 314 overwrites, in the "broadcast flag" field of the NC-Snoop packet received in Step S11, a bit corresponding to the node controller 131a with "0".

[Step S18] The NC-Snoop processing unit 314 refers to the "broadcast flag" field after the overwriting in step S17. If all the bits of the "broadcast flag" field are "0", the NC-Snoop processing unit 314 ends the process. In this case, the NC-Snoop packet received in step S11 will not be transferred to another node controller. On the other hand, if at least one of the bits in the "broadcast flag" field is "1", the NC-Snoop processing unit 314 proceeds to step S19.

[Step S19] The NC-Snoop processing unit 314 transmits the NC-Snoop packet after the overwriting in steps S16 and S17 or in step S17 only to the neighboring destination, the node controller 131b, via the arbiter 332.

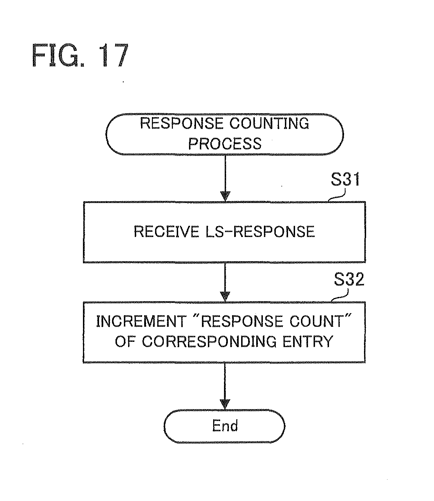

FIG. 17 is a flowchart illustrating a response counting process carried out by an NC-Snoop processing unit.

On receiving the Local-Snoop packet broadcast in step S12 of FIG. 16, each of the nodes carries out a process defined in the "command" field. When completing the defined process, each node sends back, to the node controller 131a, an LS-Response packet in which the "command" field includes information indicating the completion of the process. At this point, the node sets information held in the individual "requester identifier", "transaction identifier", and "address" fields of the received Local-Snoop packet into the like fields of the LS-Response packet.

[Step S31] The NC-Snoop processing unit 314 receives an LS-Response packet from a node on the system board 110a.

[Step S32] The NC-Snoop processing unit 314 selects, in the response transmission determination table 305, an entry whose identifier in the "transaction identifier of Local-Snoop" is the same as an identifier set in the "transaction identifier" field of the received LS-Response packet. The NC-Snoop processing unit 314 increments the "response count" for the selected entry by "1".

With the above-described process of FIG. 17, the "response count" of each entry in the response transmission determination table 305 is incremented each time a completion notice regarding a process defined in the "command" field of a corresponding Local-Snoop packet is received from a node to which the Local-Snoop packet has been broadcast. When the "response count" of the entry reaches the maximum value of "3", the NC-Snoop processing unit 314 determines that the node controller 131a has received notices of process completion from all the nodes on the system board 110a.

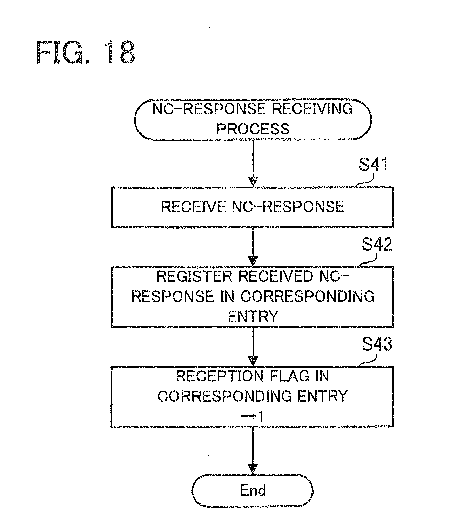

FIG. 18 is a flowchart illustrating an NC-Response receiving process carried out by an NC-Snoop processing unit.

When, in step S14 of FIG. 16, the "response flag" field of the received NC-Snoop packet is "0", NC-Response data corresponding to the received NC-Snoop packet is subsequently transmitted from a different node controller. In this case, the node controller 131a receives the corresponding NC-Response data and updates a corresponding entry in the response reception determination table 304 by the process of FIG. 18.

[Step S41] The NC-Snoop processing unit 314 receives an NC-Response packet transmitted from a different node controller via the NC-Response determining unit 324.

[Step S42] The NC-Snoop processing unit 314 selects, in the response transmission determination table 305, an entry whose global transaction identifier (that is, the "transaction identifier of NC-Snoop") is the same as an identifier set in the "transaction identifier" field of the received NC-Response packet. The NC-Snoop processing unit 314 registers the NC-response packet received in step S41 in the selected entry.

[Step S43] The NC-Snoop processing unit 314 overwrites the "reception flag" of the entry selected in step S42 with "1".

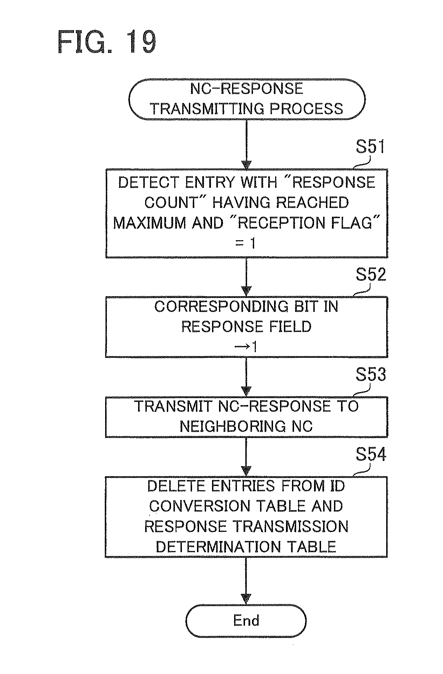

FIG. 19 is a flowchart illustrating an NC-Response transmitting process carried out by an NC-Snoop processing unit.

[Step S51] The NC-Snoop processing unit 314 detects, in the response transmission determination table 305, an entry with the "response count" having reached the maximum value of "3" and the "reception flag" being "1".

[Step S52] The NC-Snoop processing unit 314 refers to the "response field" of an NC-Response packet registered in the entry detected in step S51. The NC-Snoop processing unit 314 overwrites, in the "response field", a bit corresponding to the node controller 131a with "1".

[Step S53] The NC-Snoop processing unit 314 transmits the NC-Response packet after the overwriting in step S52 to the node controller 131b, which is a neighboring destination of the node controller 131a, via the arbiter 333.

[Step S54] The NC-Snoop processing unit 314 extracts, from the entry detected in the response transmission determination table 305 in step S51, the "transaction identifier of Local-Snoop". The NC-Snoop processing unit 314 deletes, from the identifier conversion table 303, an entry whose identifier in the "post-conversion transaction identifier" is the same as the transaction identifier extracted from the response reception determination table 304. In addition, the NC-Snoop processing unit 314 deletes the entry detected in step S51 from the response transmission determination table 305.

According to the above-described processes in FIGS. 16 to 19, the NC-Snoop processing unit 314 manages processes starting from the reception of an NC-Snoop packet to the transmission of a corresponding NC-Response packet, using the response transmission determination table. The use of the "response count" and the "reception flag" in the response transmission determination table 305 allows the NC-Snoop processing unit 314 to receive completion notices regarding a process defined in the NC-Snoop packet from all the nodes on the system board 110a and recognize reception of the corresponding NC-Response packet in a reliable manner. Therefore, it is possible to store, in the NC-Response packet, processing results obtained from all nodes having fetched corresponding data, and transmit the NC-Response packet to the home node of the data in a reliable manner.

The description now refers back to FIG. 12.

After the NC-Snoop generating unit 312 or the Request reception processing unit 313 transmits an NC-Snoop packet, the NC-Response processing unit 315 sends a processing result corresponding to the transmitted NC-Snoop packet to the home node. The NC-Response processing unit 315 also causes the response reception determination table 304 to hold the processing result until the NC-Snoop generating unit 312 or the Request reception processing unit 313 completes a process related to the packet registered in the response reception determination table 304.

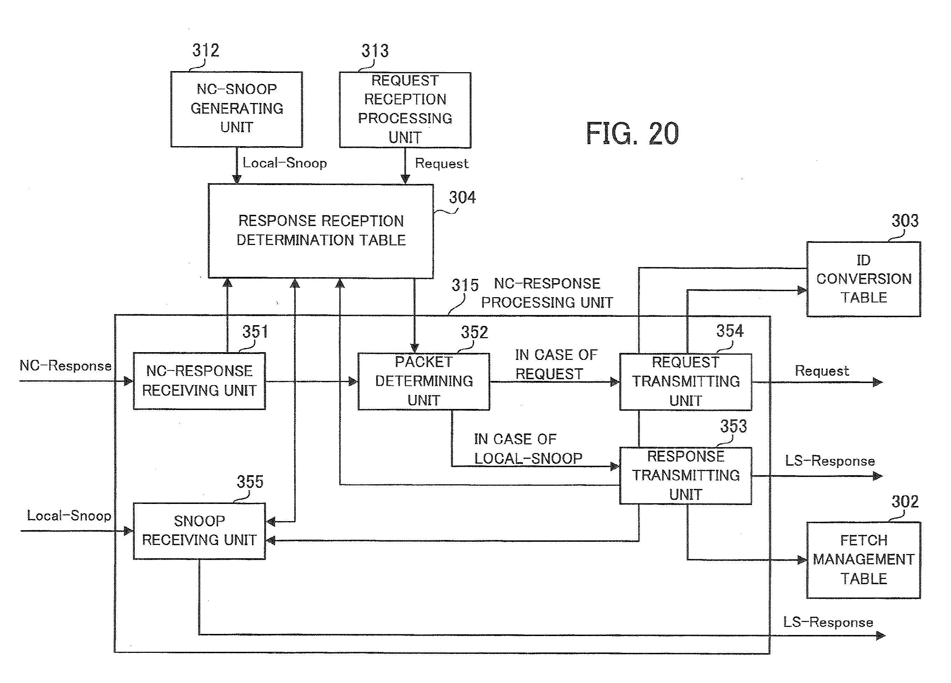

FIG. 20 illustrates a configuration example of an NC-Response processing unit and operations thereof.

The NC-Response processing unit 315 includes an NC-Response receiving unit 351, a packet determining unit 352, a response transmitting unit 353, a Request transmitting unit 354, and a Snoop receiving unit 355.

As described above, an entry is registered in the response reception determination table 304 when an NC-Snoop packet is transmitted by the NC-Snoop generating unit 312 or the Request reception processing unit 313. In the case where the NC-Snoop packet is transmitted by the NC-Snoop generating unit 312, the NC-Snoop generating unit 312 registers, in the entry made to the response reception determination table 304, a Local-Snoop packet which has triggered the transmission of the NC-Snoop packet. In the case where the NC-Snoop packet is transmitted by the Request reception processing unit 313, the Request reception processing unit 313 registers, in the entry made to the response reception determination table 304, a Request packet which has triggered the transmission of the NC-Snoop packet.

On receiving an NC-Response packet from a node controller on a different system board, the NC-Response receiving unit 351 selects, in the response reception determination table 304, an entry whose identifier set in the "transaction identifier" is the same as an identifier in the "transaction identifier" field of the received NC-Response packet. The NC-Response receiving unit 351 overwrites the "response flag" of the selected entry with "1" to thereby record, in the entry, completion of a process defined in a corresponding NC-Snoop packet. The NC-Response receiving unit 351 notifies the packet determining unit 352 of an entry identifier indicating the entry with the changed "response flag".

On receiving the notice of the entry identifier from the NC-Response receiving unit 351, the packet determining unit 352 retrieves, from the response reception determination table 304, a packet registered in the "original packet" of an entry corresponding to the entry identifier. If the retrieved packet is a Local-Snoop packet, the packet determining unit 352 transmits the packet to the response transmitting unit 353. The retrieved packet being a Local-Snoop packet happens, as the example described in FIG. 10, when transmission of an NC-Snoop packet is triggered by a Local-Snoop packet transmitted from a home node on the same system board and, subsequently, an NC-Response packet corresponding to the transmitted NC-Snoop packet is received.

On the other hand, if the retrieved packet is a Request packet, the packet determining unit 352 transmits the packet to the Request transmitting unit 354. The retrieved packet being a Request packet happens, as the example described in FIG. 6, when transmission of an NC-Snoop packet is triggered by a Request packet transmitted from a node on a different system board and, subsequently, an NC-Response packet corresponding to the transmitted NC-Snoop packet is received.

On receiving a Local-Snoop packet from the packet determining unit 352, the response transmitting unit 353 transmits, to the home node on the system board 110a, an LS-Response packet corresponding to the received Local-Snoop packet. As for the LS-Response packet, information set in the individual fields by the response transmitting unit 353 is as follows: the "destination identifier" field includes an identifier of the home node managing an address set in the Local-Snoop packet received from the packet determining unit 352; the "requester identifier", "transaction identifier", and "address" fields include information individually set in the like fields of the received Local-Snoop packet; and the "command" field includes information indicating completion of a process defined in the "command" field of the received Local-Snoop packet.

After transmitting the LS-Response packet, the response transmitting unit 353 updates, in the fetch management table 302, an entry corresponding to the address set in the transmitted LS-Response packet. For example, in the case where the "command" field of the transmitted LS-Response packet includes "Response_I", the response transmitting unit 353 changes the cached state set in the entry to "I state" and deletes one or more identifiers in the "identifier of node having fetched data" registered in the entry. In the case where the "command" field of the transmitted LS-Response packet includes "Response_S", the response transmitting unit 353 changes the cached state set in the entry to "S state". The response transmitting unit 353 also converts an identifier set in the "requester identifier" field of the LS-Response packet from a local identifier to a global identifier and writes the converted global identifier in the "identifier of node having fetched data" of the entry in the fetch management table 302.

Further, the response transmitting unit 353 after transmitting the LS-Response packet deletes, from the response reception determination table 304, an entry in which the Local-Snoop packet received from the packet determining unit 352 has been registered. The response transmitting unit 353 searches for the entry to be deleted, for example, by comparing the "transaction identifier" field of the Local-Snoop packet and the "transaction identifier" field of the original packet registered in each entry of the response reception determination table 304.

The transmission of the LS-Response packet by the response transmitting unit 353 completes the process carried out at the node controller 131a with regard to an Local-Snoop packet registered in the response reception determination table 304 by the NC-Snoop generating unit 312. Until the completion of the process at the node controller 131a with regard to an NC-Snoop packet registered in the response reception determination table 304 by the NC-Snoop generating unit 312, the above-described operations of the NC-Response receiving unit 351, the packet determining unit 352, and the response transmitting unit 353 allow information needed for the process at the node controller 131a to be held in the response reception determination table 304 in a reliable manner.

On receiving a Request packet from the packet determining unit 352, the request transmitting unit 354 transmits the Request packet to the home node on the system board 110a. At the time of the reception of the Request packet from the packet determining unit 352, individual identifiers in the "destination identifier", "requester identifier", and "transaction identifier" fields are global identifiers, and therefore, the request transmitting unit 354 converts these identifiers into local identifiers. Specifically, the Request transmitting unit 354 converts the identifier set in the "requester identifier" field into an identifier indicating the node controller 131a while converting the identifiers individually set in the "destination identifier" and "transaction identifier" field into local identifiers.

The request transmitting unit 354 transmits the Request packet having the converted identifiers to the home node on the system board 110a. The request transmitting unit 354 also generates a new entry in the fetch management table 302 and subsequently registers, in the generated entry, individual identifiers for the "post-conversion transaction identifier", "post-conversion requester identifier" and "post-conversion transaction identifier".

On receiving the Request packet from the Request transmitting unit 354, the home node transmits a Local-Snoop packet to the node controller 131a. The local-Snoop packet from the home node is received by the Snoop receiving unit 355. The Snoop receiving unit 355 selects, from the identifier conversion table 303, an entry whose "post-conversion transaction identifier" is an identifier set in the "transaction identifier" field of the received Local-Snoop packet. The Snoop receiving unit 355 extracts, from the selected entry, a global transaction identifier set in the "pre-conversion transaction identifier", and then selects, in the response reception determination table 304, an entry whose "transaction identifier" is the transaction identifier extracted from the identifier conversion table 303.

The Snoop receiving unit 355 determines that the "response flag" of the entry selected from the response reception determination table 304 is "1" and, subsequently, transmits an LS-Response packet to the home node and deletes the selected entry from the response reception determination table 304. As for the transmitted LS-response packet, the "requester identifier" and "transaction identifier" fields include individual identifiers set in the like fields of the received Local-Snoop packet.

This completes the process carried out at the node controller 131a with regard to the Request packet registered by the Request reception processing unit 313 in the response reception determination table 304. Until the completion of the process at the node controller 131a with regard to the Request packet, the above-described operations of the NC-Response receiving unit 351, the packet determining unit 352, and the response transmitting unit 353 allow information needed for the process at the node controller 131a to be held in the response reception determination table 304 in a reliable manner.

The description now refers back to FIG. 12.

On receiving a DATA-Response packet from the home node on the system board 110a, the DATA-Response transmitting unit 316 selects, in the identifier conversion table 303, an entry whose "post-conversion transaction identifier" is an identifier set in the "transaction identifier" field of the received DATA-Response packet. The entry selected by the DATA-Response transmitting unit 316 at this point is one having been registered by the Request transmitting unit 354 of the NC-Response processing unit.

The DATA-Response transmitting unit 316 overwrites the "destination identifier" and "requester identifier" fields of the received DATA-Response packet with an identifier set in the "pre-conversion requester identifier" of the entry selected from the identifier conversion table 303. The DATA-Response transmitting unit 316 also overwrites the "transaction identifier" field of the received DATA-Response packet with an identifier set in the "pre-conversion transaction identifier" of the selected entry. Subsequently, the DATA-Response transmitting unit 316 transmits the DATA-Response packet after the overwriting to the node controller 131b via the arbiter 334, and also deletes the selected entry from the identifier conversion table 303.

In addition, the DATA-Response transmitting unit 316 updates, in the fetch management table 302, an entry corresponding to an address set in the transmitted DATA-Response packet. For example, in the case where "D-Response_E" is set in the "command" field of the transmitted DATA-Response packet, the DATA-Response transmitting unit 316 changes the cached state set in the entry to the E state. With this, the DATA-Response transmitting unit 316 overwrites the "identifier of node having fetched data" of the entry with an identifier set in the "requester identifier" field of the transmitted DATA-Response packet. On the other hand, if "D-Response_E" is set in the "command" field of the transmitted DATA-Response packet, the DATA-Response transmitting unit 316 changes the cached state set in the entry to the S state. With this, the DATA-Response transmitting unit 316 writes an identifier set in the "requester identifier" field of the transmitted DATA-Response packet into the "identifier of node having fetched data" of the entry. If "Complete" is set in the "command" field of the transmitted DATA-Response packet, the DATA-Response transmitting unit 316 changes the cased state in the entry to the I state.

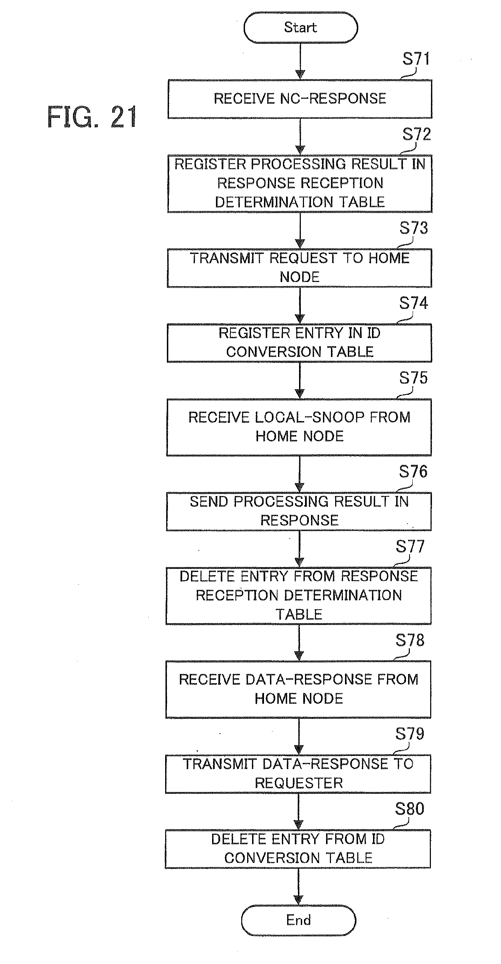

On receiving a DATA-Response packet from a node controller on a different system board, the destination determining unit 325 refers to the "destination identifier" field of the received DATA-Response packet. If a node on the system board 110a is set in the "destination identifier" field, the destination determining unit 325 changes individual identifiers set in the "destination identifier", "requester identifier", and "transaction identifier" fields of the received DATA-Response packet from global identifiers to local identifiers. The destination determining unit 325 transmits the changed DATA-Response packet to the requester node on the system board 110a. On the other hand, if a node on a system board other than the system board 110a is set in the "destination identifier" field, the destination determining unit 325 transfers the received DATA-Response packet to the node controller 131b via the arbiter 334. FIG. 21 is a flowchart illustrating a process example of a node controller following transmission of an NC-Snoop packet to a different node controller. FIG. 21 depicts a process following the event in which, as in the example of FIG. 6, the node controller 131b on the system board 110b transmits an NC-Snoop packet in response to reception of a Request packet from a different node controller.

[Step S71] The NC-Response determining unit 324 of the node controller 131b receives an NC-Response packet from a different node controller. The NC-Response determining unit 324 determines that the "destination identifier" field of the received NC-Response packet indicates a node on the system board 110b and, then, transmits the received NC-Response packet to the NC-Response processing unit 315.

[Step S72] The NC-Response processing unit 315 of the node controller 131b registers, in the response reception determination table 304, a result of a process carried out according to a corresponding NC-Snoop packet, which result is notified of by the received NC-Response packet. Specifically, the NC-Response receiving unit 351 of the NC-Response processing unit 315 selects, in the response reception determination table 304, an entry whose "transaction identifier" has the same identifier as one set in the "transaction identifier" field of the received NC-Response packet. The NC-Response receiving unit 351 overwrites the "response flag" of the selected entry with "1" to thereby record, in the entry, completion of the process defined in a corresponding NC-Snoop packet.

[Step S73] The NC-Response processing unit 315 of the node controller 131b transmits a Request packet to the home node on the system board 110b. Specifically, the packet determining unit 352 of the NC-Response processing unit 315 retrieves, from the response reception determination table 304, the "original packet" of the entry whose "response flag" is modified in step S72. The packet determining unit 352 recognizes that the retrieved packet is a response packet and, then, transmits the received response packet to the Request transmitting unit 354. On receiving the Request packet from the packet determining unit 352, the Request transmitting unit 354 converts individual identifiers set in the "destination identifier", "requester identifier", and "transaction identifier" fields of the received Request packet from global identifiers to local identifiers, and transmits the Request packet having the local identifiers to the home node on the system board 110a.

[Step S74] The Request transmitting unit 354 registers, as an entry, the pre-conversion and post-conversion identifiers in the identifier conversion table 303.

On receiving the Request packet from the node controller 131b, the home node determines, based on its own fetch management table 202, that data at an address included in the received Request packet has been fetched by a node on a different system node and, then, transmits a Local-Snoop packet to the node controller 131b.

[Step S75] The NC-Response processing unit 315 of the node controller 131b receives the Local-Snoop packet from the home node.

[Step S76] The NC-Response processing unit 315 of the node controller 131b sends back, to the home node connected to the node controller 131b, an LS-Response packet storing therein a processing result obtained at a node having fetched the data. Specifically, the Snoop receiving unit 355 of the NC-Response processing unit 315 converts the identifier set in the "transaction identifier" field of the received LS-Response packet from a local identifier to a global identifier based on the identifier conversion table 303 and, subsequently, selects an entry corresponding to the converted transaction identifier in the response reception determination table 304. When determining that the "response flag" of the entry is "1", the Snoop receiving unit 355 transmits the LS-Response packet to the home node.

[Step S77] The Snoop receiving unit 355 of the NC-Response processing unit 315 in the node controller 131b deletes the entry selected in step S76 from the response reception determination table 304.

The home node after receiving the LS-Response packet from the node controller 131b determines that cache coherence is maintained and then transmits, to the node controller 131b, a DATA-Response packet in response to the Request packet issued in step S73.

[Step S78] The DATA-Response transmitting unit 316 of the node controller 131b receives the DATA-Response packet transmitted from the home node.

[Step S79] The DATA-Response transmitting unit 316 converts individual identifiers set in the "destination identifier", "requester identifier", and "transaction identifier" fields of the received DATA-Response packet based on the identifier conversion table 303, and subsequently transmits the DATA-Response packet having the converted identifiers to the node controller 131b.

[Step S80] The DATA-Response transmitting unit 316 deletes the entry referred to in step S79 from the identifier conversion table 303.

According to the above-described second embodiment, a node controller connected to a home node is able to make a request to all node controllers to which nodes having fetched corresponding data belong for implementation of a process, using a single NC-Snoop packet. Therefore, it is possible to reduce transmission load on the communication channel connecting the node controllers in the event where data has been fetched by multiple nodes, compared to the case where a node controller connected to the home node transmits snoop packets individually dedicated to all the nodes having fetched the data.

In addition, completion notices regarding the process requested by the NC-Snoop packet are transmitted from all the nodes having fetched the data to a node controller to which the home node is connected, using a single NC-Response packet. This reduces the data volume of the completion notices transmitted in the communication channel connecting the node controllers in the event where data has been fetched by multiple nodes, compared to the case where the completion notices are sent back from all the nodes having fetched the data using individual response packets.

Note that the above-described second embodiment illustrates an example in which control information requesting control over the states of cache units is transmitted from one system board to another, however, a different type of control information may be transmitted using a control packet having a similar format as the NC-Snoop packet. For example, control information requesting an interrupt to all the nodes of the information processing system 100 may be transmitted using a control packet having a similar format as the NC-Snoop packet. In this case, a source node controller sets all the bits in the "broadcast flag" field of the control packet to "1". On receiving the control packet, all node controllers including the source node controller individually broadcast an interrupt request to all nodes connected thereto. With this, it is possible to make an interrupt request to all the nodes including nodes connected to the source node controller. Because a response packet is not transmitted in response to the interrupt request, the "response flag" field of the control packet may be set to an initial value of "0". Use of such a control packet allows an interrupt request to be made to all the nodes in a reliable manner while reducing transmission load on the communication channel connecting the node controllers.

In addition, according to the above-described second embodiment, an NC-Snoop packet is used to transmit a command to a node disposed on a different system board and having fetched corresponding data, however, a snoop packet having a similar structure as a Local-Snoop packet may be used instead of an NC-Snoop packet in the case where only one node has fetched the data. A snoop packet having the same structure as a Local-Snoop packet and transmitted from one node controller to another is hereinafter referred to as a "dedicated snoop packet".

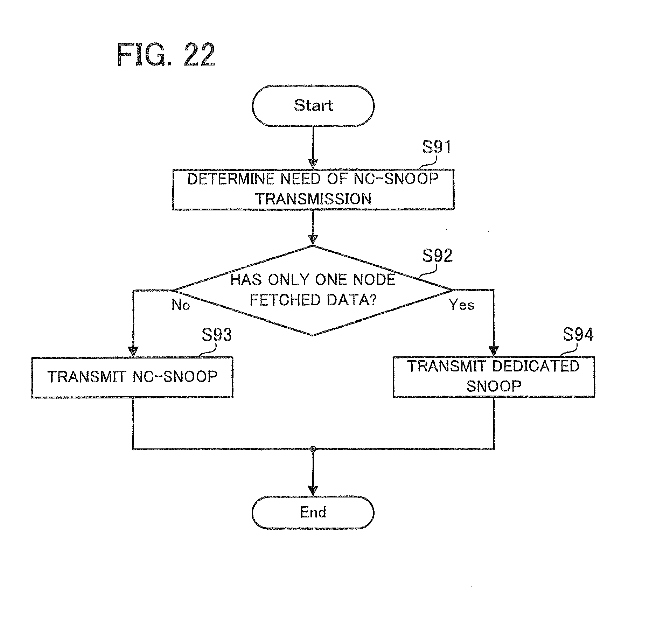

FIG. 22 is a flowchart illustrating a process of determining a snoop packet to be transmitted. A process carried out in relation to transmission of a snoop packet by the NC-Snoop processing unit 314 is described here as an example.

[Step S91] The NC-Snoop processing unit 314 determines need of NC-Snoop packet transmission to a node controller on a different system board. Conditions for determining need of NC-Snoop packet transmission are as described in FIG. 12.

[Step S92] The NC-Snoop processing unit 314 determines, based on the fetch management table 302, whether data in question has been fetched by only one node on a different system board. The process moves to step S93 if the data has been fetched by multiple nodes, while the process moves to step S94 if the data has been fetched by only one node.

[Step S93] The NC-Snoop processing unit 314 transmits an NC-Snoop packet.

[Step S94] The NC-Snoop processing unit 314 transmits a dedicated snoop packet in which a node identifier of the node having fetched the data is set in the "destination node" field.

Note that the operations of steps S92 to S94 may be carried out by the NC-Snoop generating unit 312 when transmitting an NC-Snoop packet.

On receiving the dedicated snoop packet, a node controller connected to the node corresponding to the identifier set in the "destination identifier" field of the dedicated snoop packet transmits a Local-Snoop packet to the node indicated by the "destination identifier" field. At this point, the node controller converts individual identifiers set in the "requester identifier" and "transaction identifier" fields of the received dedicated snoop packet from global identifiers to local identifiers. In addition, the node controller converts an identifier set in the "destination identifier" field in such a manner as to indicate itself and, subsequently, transmits the converted dedicated snoop packet as a Local-Snoop packet. The node controller registers the post-conversion local identifier and the pre-conversion global identifiers in the fetch management table 302.

On receiving the Local-Snoop packet, the node carries out a process defined in the "command" field and subsequently transmits, to the node controller connected to itself, an LS-Response packet in which information indicating the completion of the process is set in the "command" field. On receiving the LS-Response packet, the node controller converts, based on the fetch management table 302, individual identifiers set in the "requester identifier" and "transaction identifier" fields of the LS-Response packet from local identifiers to global identifiers and also changes an identifier in the "destination identifier" field to the identifier of the home node. The node controller transmits the LS-Response packet having the converted identifiers to a different node controller as a dedicated response packet. The node controller connected to the home node, that is, a source node controller of the dedicated snoop packet, receives the dedicated response packet to thereby receive a process completion notice.

Since not including the "broadcast flag" and "response flag" fields, the above-described dedicated snoop packet has a smaller data volume than an NC-Snoop packet by as much data volume as these flag fields. Therefore, in the case where only one node on a different system board has fetched corresponding data, transmission of such a dedicated snoop packet, instead of an NC-Snoop packet, further reduces the data volume transmitted from one system board to another.

In addition, the above-described dedicated response packet does not include the "response field" and, therefore, has a smaller data volume than an NC-Response packet by as much data volume as the "response field". As a result, transmission of a dedicated response packet in response to such a dedicated snoop packet further reduces the data volume transmitted from one system board to another.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be restored to, falling within the scope of the invention as claimed.

### Reference Signs List

- 1: information processing system
- 10a to 10d: information processing unit
- 11a to 11d: control information transmitting unit
- 12a to 12d: control information receiving unit
- 20: control packet
- 21: control information
- 22: destination information

## Claims

1. An information processing system comprising a plurality of information processing units connected by a communication channel in a ring topology,
wherein each of the information processing units includes
a control information transmitting unit which transmits, to the communication channel, a control packet including control information and destination information that designates one or more of the information processing units as destinations of the control information, and
a control information receiving unit which receives the control packet via the communication channel, imports, when the destination information designates an information processing unit to which the control information receiving unit belongs, the control information from the received control packet and then transmits, to the communication channel, the control packet after modifying the destination information in such a manner as not to designate the information processing unit to which the control information receiving unit belongs, and transmits the received control packet to the communication channel when the destination information does not designate the information processing unit to which the control information receiving unit belongs.

2. The information processing system according to claim 1, wherein when the destination information of the received control packet designates only the information processing unit to which the control information receiving unit belongs, the control information receiving unit does not transmit the received control packet to the communication channel.

3. The information processing system according to one of claims 1 and 2,
wherein each of the information processing units further includes a response processing unit which transmits, to the communication channel, a response packet destined for a source of the control packet received by the control information receiving unit of an information processing unit to which the response processing unit belongs,
the control packet transmitted by the control information transmitting unit includes reception determination information indicating whether the control information has been received by at least one of the information processing units designated by the destination information,
when the destination information of the received control packet designates the information processing unit to which the control information receiving unit belongs and, then, the reception determination information of the received control packet indicates that the control information has not been received, the control information receiving unit modifies the received control packet in such a manner that the destination information does not designate the information processing unit to which the control information receiving unit belongs, and that the reception determination information indicates that the control information has been received, and transmits the modified control packet to the communication channel, and
when the reception determination information of the control packet received by the control information receiving unit of the information processing unit to which the response processing unit belongs indicates that the control information has not been received, the response processing unit generates the response packet which stores therein response information corresponding to the control information of the received control packet and transmits the generated response packet to the communication channel.

4. The information processing system according to claim 3, wherein when the control information receiving unit of the information processing unit to which the response processing unit belongs imports the control information from the control packet and, subsequently, the response processing unit receives the response packet corresponding to the control packet via the communication channel, the response processing unit transmits, to the communication channel, the response packet after adding thereto the response information corresponding to the imported control information.

5. The information processing system according to one of claims 3 and 4, wherein when the reception determination information of the control packet received by the control information receiving unit of the information processing unit to which the response processing unit belongs indicates that the control information has been received, the response processing unit adds, to the response packet received from the response processing unit of a different information processing unit via the communication channel, the response information corresponding to the control information imported from the control packet corresponding to the received response packet, and then transmits the response packet with the response information added thereto to the communication channel.

6. The information processing system according to one of claims 1 and 2,
wherein each of the information processing units further includes a processing unit having a cache unit, and a storage unit to which part of an address space shared by the information processing units is allocated, and
when data to which access is requested, which data is stored in the storage unit of an information processing unit to which the control information transmitting unit belongs, has been cached in the cache unit of one or more different information processing units, the control information transmitting unit transmits, to the communication channel, the control packet in which the destination information designates the one or more different information processing units.

7. The information processing system according to claim 6,
wherein each of the information processing units has a plurality of information processing nodes, each of which includes the processing unit and the storage unit, and
the control information receiving unit broadcasts, to the information processing nodes of the information processing unit to which the control information receiving unit belongs, the control information imported from the control packet received via the communication channel.

8. The information processing system according to claim 7, each of the information processing units further includes a response processing unit which transmits, to the communication channel, a response packet destined for a source of the control packet received by the control information receiving unit of an information processing unit to which the response processing unit belongs on receiving, from all the information processing nodes of the information processing unit to which the response processing unit belongs, response information corresponding to the control information broadcast by the control information receiving unit of the information processing unit to which the response processing unit belongs.

9. The information processing system according to claim 8,
wherein the control packet transmitted by the control information transmitting unit includes reception determination information indicating whether the control information has been received by at least one of the information processing units designated by the destination information,
when the destination information of the received control packet designates the information processing unit to which the control information receiving unit belongs and, then, the reception determination information of the received control packet indicates that the control information has not been received, the control information receiving unit modifies the received control packet in such a manner that the destination information does not designate the information processing unit to which the control information receiving unit belongs, and that the reception determination information indicates that the control information has been received, and transmits the modified control packet to the communication channel, and
when the reception determination information of the control packet received by the control information receiving unit of the information processing unit to which the response processing unit belongs indicates that the control information has not been received, the response processing unit generates the response packet, and adds, on receiving the response information from all the information processing nodes of the information processing unit to which the response processing unit belongs, the received response information to the generated response packet and transmits the response packet with the response information added thereto to the communication channel.

10. The information processing system according to claim 9, wherein when the reception determination information of the control packet received by the control information receiving unit of the information processing unit to which the response processing unit belongs indicates that the control information has been received, the response processing unit adds, on receiving the response information from all the information processing nodes of the information processing unit to which the response processing unit belongs as well as receiving the response packet transmitted from the response processing unit of a different information processing unit via the communication channel, the response information corresponding to the control information imported from the control packet corresponding to the received response packet to the received response packet and transmits the response packet with the response information added thereto to the communication channel.

11. The information processing system according to one of claims 6 to 10, wherein when the data has been cached in only one cache unit of a different information processing unit, the control information transmitting unit transmits, to the communication channel, a dedicated control packet including control information destined for an information processing node including the only one cache unit.

12. The information processing system according to claim 1,
wherein the control packet transmitted from the control information transmitting unit includes destination determination information including bits corresponding one-to-one to the information processing units and each indicating whether the corresponding information processing unit is a designated destination of the control packet, and
the control information receiving unit determines, based on the destination determination information of the received control packet, whether the information processing unit to which the control information receiving unit belongs is the designated destination, and modifies, when determining affirmatively, the destination determination information of the received control packet in such a manner that a bit corresponding to the information processing unit to which the control information receiving unit belongs does not indicate that the information processing unit to which the control information receiving unit belongs is the designated destination.

13. The information processing system according to claim 1,
wherein each of the information processing units has a plurality of information processing nodes, each of which includes a processing unit and a storage unit, and
when access to data in one of the storage units of an information processing unit to which the control information transmitting unit belongs is requested by a different information processing unit, or when access to data in the storage unit of an information processing node of the information processing unit to which the control information transmitting unit belongs is requested by a different information processing node of the information processing unit to which the control information transmitting unit belongs, the control information transmitting unit transmits the control packet when the data has been cached in a cache unit of a different information processing unit.

14. The information processing system according to claim 6, wherein the control information included in the control packet transmitted by the control information transmitting unit is information for controlling cache units having cached the data in such a manner as to maintain state coherence of cached data corresponding to the data.

15. An information transmitting method for an information processing system including a plurality of information processing units connected by a communication channel in a ring topology, the information transmitting method comprising:
transmitting, by a first information processing unit among the information processing units, a control packet to the communication channel, the control packet including control information and information that designates one or more of the information processing units as destinations of the control information, and
receiving, by a second information processing unit among the information processing units, the control packet via the communication channel, importing, when the destination information designates an information processing unit to which the second information processing unit belongs, the control information from the received control packet and then transmitting, to the communication channel, the control packet after modifying the destination information in such a manner as not to designate the information processing unit to which the second information processing unit belongs, and transmitting the received control packet to the communication channel when the destination information does not designate the information processing unit to which the second information processing unit belongs.

16. The information transmitting method according to claim 15, wherein when the destination information of the received control packet designates only the second information processing unit, the second information processing unit does not transmit the received control packet to the communication channel.

17. The information transmitting method according to one of claims 15 and 16,
wherein the control packet transmitted by the first information processing unit includes reception determination information indicating whether the control information has been received by at least one of the information processing units designated by the destination information, and
the second information processing unit
modifies, when the destination information of the received control packet designates the second information processing unit and then the reception determination information of the received control packet indicates that the control information has not been received, the received control packet in such a manner that the destination information does not designate the second information processing unit, and that the reception determination information indicates that the control information has been received, and transmits the modified control packet to the communication channel, and
generates, after the modification of the received control packet, a response packet destined for the first information processing unit and storing therein response information corresponding to the control information of the received control packet and transmits the generated response packet to the communication channel.

18. The information transmitting method according to claim 17,
wherein a third information processing unit among the information processing units
receives the control packet via the communication channel, and imports the control information from the received control packet when the destination information designates the third information processing unit, and
transmits, when receiving the response packet corresponding to the control packet via the communication channel after importing the control information from the control packet, the response packet after adding thereto the response information corresponding to the imported control information.
